# EUROPEAN PATENT APPLICATION

(11) **EP 4 657 555 A1**
(43) Date of publication of application: **03.12.2025**
(21) Application number: 24747116.2
(22) Date of filing: 11.01.2024
(51) Int. Cl.: H01M 4/1397, C08F 220/18, C08K 3/04, C08K 5/51, C08L 101/14, H01M 4/136, H01M 4/58, H01M 4/62

(54) **SLURRY COMPOSITION FOR NON-AQUEOUS SECONDARY BATTERY ELECTRODE, ELECTRODE FOR NON-AQUEOUS SECONDARY BATTERY, AND NON-AQUEOUS SECONDARY BATTERY**

(30) Priority: 26.01.2023 JP 2023010515
(71) Applicant: Zeon Corporation, Tokyo 100-8246 (JP)
(72) Inventor: MATSUO, Yusaku, Tokyo 100-8246 (JP)
(74) Representative: Maiwald GmbH
(86) International application number: PCT/JP2024/000503
(87) International publication number: WO 2024/157785

(57) **Abstract**

A slurry composition for a non-aqueous secondary battery electrode contains an olivine-type lithium phosphate compound and a water-soluble polymer. The volume-average particle diameter D50 of the olivine-type lithium phosphate compound and the average hydrodynamic radius of the water-soluble polymer are within specific ranges.

## Description

### TECHNICAL FIELD

The present disclosure relates to a slurry composition for a non-aqueous secondary battery electrode, an electrode for a non-aqueous secondary battery, and a non-aqueous secondary battery.

### BACKGROUND

Non-aqueous secondary batteries (hereinafter, also referred to simply as "secondary batteries") such as lithium ion secondary batteries have characteristics such as compact size, light weight, high energy-density, and the ability to be repeatedly charged and discharged, and are used in a wide variety of applications. Consequently, in recent years, studies have been made to improve battery members such as electrodes for the purpose of achieving even higher secondary battery performance.

An electrode for a secondary battery normally includes an electrode mixed material layer. The electrode mixed material layer is formed, for example, through application and drying, on a current collector, of a composition (slurry composition for a non-aqueous secondary battery electrode) in the form of a slurry having an electrode active material, a binder composition for a non-aqueous secondary battery electrode containing a polymer serving as a binder, and so forth dispersed in a dispersion medium.

In recent years, attempts have been made to improve components of slurry compositions used in the formation of electrode mixed material layers in order to achieve further improvement of secondary battery performance (for example, refer to Patent Literature (PTL) 1).

For example, PTL 1 discloses, as a binder, a water-soluble polymer that includes 50 mass% to 95 mass% of structural units derived from an ethylenically unsaturated carboxylic acid ester monomer and 5 mass% to 50 mass% of structural units derived from an ethylenically unsaturated carboxylic acid salt monomer, and that has a weight-average molecular weight of 500,000 or more. PTL 1 reports that a positive electrode aqueous composition containing the above-described water-soluble polymer as a binder, a compound having an olivine structure such as lithium iron phosphate as a positive electrode active material, and water or the like as a dispersion medium can be used as a slurry composition for forming a positive electrode for a secondary battery and that this positive electrode aqueous composition improves electrode formability, substrate close adherence, and flexibility without loss of dispersibility or viscosity modification functionality.

### CITATION LIST

### Patent Literature

PTL 1: WO2012/008539A1

### SUMMARY

### (Technical Problem)

However, there is room for improvement of a slurry composition according to the conventional technique described above in terms of achieving a balance of high levels of close adherence of an obtained electrode mixed material layer to a current collector and output characteristics and cycle characteristics of an obtained secondary battery.

Accordingly, one object of the present disclosure is to provide a slurry composition for a non-aqueous secondary battery electrode that enables a balance of high levels of close adherence of an obtained electrode mixed material layer to a current collector and output characteristics and cycle characteristics of an obtained non-aqueous secondary battery.

Another object of the present disclosure is to provide an electrode for a non-aqueous secondary battery that includes an electrode mixed material layer having excellent close adherence to a current collector and that can cause a non-aqueous secondary battery to display high output characteristics and cycle characteristics.

Yet another object of the present disclosure is to provide a non-aqueous secondary battery that includes this electrode for a non-aqueous secondary battery.

### (Solution to Problem)

The inventor conducted diligent investigation with the aim of solving the problem set forth above. The inventor discovered that in production of a slurry composition for a non-aqueous secondary battery electrode containing an olivine-type lithium phosphate compound and a water-soluble polymer, by controlling the volume-average particle diameter D50 of the olivine-type lithium phosphate compound and the average hydrodynamic radius of the water-soluble polymer to within specific ranges, it is possible to achieve a balance of high levels of close adherence of an electrode mixed material layer obtained using the slurry composition for a non-aqueous secondary battery electrode to a current collector and output characteristics and cycle characteristics of a non-aqueous secondary battery, and, in this manner, completed the present disclosure.

Specifically, with the aim of advantageously solving the problem set forth above, [1] a presently disclosed slurry composition for a non-aqueous secondary battery electrode comprises an olivine-type lithium phosphate compound and a water-soluble polymer, wherein the olivine-type lithium phosphate compound has a volume-average particle diameter D50 of not less than 0.5 µm and not more than 3.0 µm, and the water-soluble polymer has an average hydrodynamic radius of not less than 10 nm and not more than 30 nm.

Through a slurry composition for a non-aqueous secondary battery electrode in which the volume-average particle diameter D50 of an olivine-type lithium phosphate compound and the average hydrodynamic radius of a water-soluble polymer are within specific ranges in this manner, it is possible to achieve a balance of high levels of close adherence of an obtained electrode mixed material layer to a current collector (hereinafter, also referred to simply as "adhesiveness" of an electrode mixed material layer) and output characteristics and cycle characteristics of an obtained non-aqueous secondary battery.

Note that when a polymer is said to be "water-soluble" in the present specification, this means that when 0.5 g (in terms of solid content) of the polymer is dissolved in 100 g of water at a temperature of 25°C, the amount of insoluble content is less than 5.0 mass%. Moreover, the volume-average particle diameter D50 of an olivine-type lithium phosphate compound refers to a particle diameter D50 at which, in a particle size distribution (by volume) measured by a laser diffraction particle size analyzer, cumulative volume calculated from a small diameter end of the distribution reaches 50%. Furthermore, the average hydrodynamic radius of a water-soluble polymer can be measured by a method described in the EXAMPLES section of the present specification.

[2] In the slurry composition for a non-aqueous secondary battery electrode according to the foregoing [1], the water-soluble polymer preferably includes an acidic group-containing monomer unit in a proportion of not less than 3.0 mass% and not more than 40.0 mass%. When the water-soluble polymer includes an acidic group-containing monomer unit in a proportion of not less than 3.0 mass% and not more than 40.0 mass%, a balance of even higher levels of output characteristics and cycle characteristics of an obtained non-aqueous secondary battery can be achieved.

Note that when a polymer is said to "include a monomer unit", this means that "a polymer obtained using that monomer includes a repeating unit derived from the monomer". A "repeating unit derived from an acidic group-containing monomer" is also referred to as an "acidic group-containing monomer unit" in the present specification. Also note that the "proportional content (mass%)" of each monomer unit (repeating unit) included in a polymer can be measured by a nuclear magnetic resonance (NMR) method such as ¹H-NMR.

[3] In the slurry composition for a non-aqueous secondary battery electrode according to the foregoing [1] or [2], the water-soluble polymer preferably includes, as a non-hydroxy group-containing (meth)acrylic acid ester monomer unit, either or both of a non-hydroxy group-containing (meth)acrylic acid alkyl ester monomer unit and a monomer unit derived from a monomer represented by formula (I), shown below: 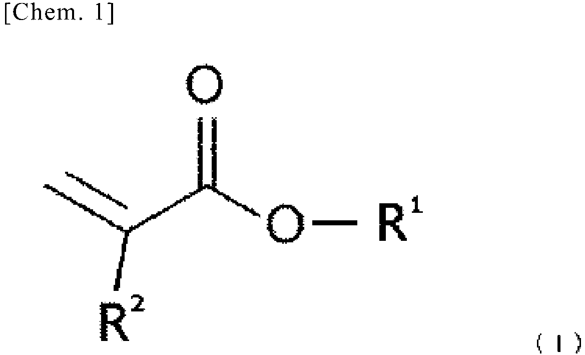 given that in formula (I), R¹ is a non-hydroxy group-containing organic group that includes at least one ether bond, and R² is a hydrogen atom or a methyl group.

When the water-soluble polymer includes at least one of the two specific types of monomer units set forth above as a non-hydroxy group-containing (meth)acrylic acid ester monomer unit, cycle characteristics of an obtained non-aqueous secondary battery can be even further enhanced.

Note that in the present specification, "(meth)acryl" is used to indicate "acryl" or "methacryl".

[4] In the slurry composition for a non-aqueous secondary battery electrode according to the foregoing [3], it is preferable that the water-soluble polymer includes the non-hydroxy group-containing (meth)acrylic acid alkyl ester monomer unit in a proportion of not less than 2.0 mass% and not more than 15.0 mass% and includes the monomer unit derived from a monomer represented by formula (I) in a proportion of not less than 5.0 mass% and not more than 15.0 mass%. When the water-soluble polymer includes the two specific types of monomer units set forth above in the specific proportions set forth above as non-hydroxy group-containing (meth)acrylic acid ester monomer units, cycle characteristics and output characteristics of an obtained non-aqueous secondary battery can be enhanced in an even better balance.

[5] In the slurry composition for a non-aqueous secondary battery electrode according to any one of the foregoing [1] to [4], a ratio of the volume-average particle diameter D50 of the olivine-type lithium phosphate compound and the average hydrodynamic radius r of the water-soluble polymer is preferably within a range of D50:r = 1:0.005 to 1:0.050. When the ratio of the volume-average particle diameter D50 of the olivine-type lithium phosphate compound and the average hydrodynamic radius r of the water-soluble polymer that are contained in the slurry composition is within the specific range set forth above, cycle characteristics and output characteristics of an obtained non-aqueous secondary battery can be enhanced in an even better balance.

[6] The slurry composition for a non-aqueous secondary battery electrode according to any one of the foregoing [1] to [5] preferably further comprises a particulate polymer as a binder. When the slurry composition for a non-aqueous secondary battery electrode further contains a particulate polymer as a binder, close adherence of an obtained electrode mixed material layer to a current collector can be further improved.

[7] The slurry composition for a non-aqueous secondary battery electrode according to any one of the foregoing [1] to [6] preferably further comprises either or both of one or more carbon nanotubes and a particulate conductive material as a conductive material. When the slurry composition further contains either or both of carbon nanotubes and a particulate conductive material as a conductive material, output characteristics of an obtained non-aqueous secondary battery can be even further enhanced.

Moreover, with the aim of advantageously solving the problem set forth above, [8] a presently disclosed electrode for a non-aqueous secondary battery comprises an electrode mixed material layer formed using the slurry composition for a non-aqueous secondary battery electrode according to any one of the foregoing [1] to [7].

The presently disclosed electrode for a non-aqueous secondary battery includes an electrode mixed material layer that is formed using any one of the slurry compositions for a non-aqueous secondary battery electrode set forth above and that has excellent close adherence to a current collector and can cause a non-aqueous secondary battery to display high output characteristics and cycle characteristics.

Furthermore, with the aim of advantageously solving the problem set forth above, [9] a presently disclosed non-aqueous secondary battery comprises the electrode for a non-aqueous secondary battery according to the foregoing [8].

A non-aqueous secondary battery that includes the electrode for a non-aqueous secondary battery set forth above can display high output characteristics and cycle characteristics.

### (Advantageous Effect)

According to the present disclosure, it is possible to provide a slurry composition for a non-aqueous secondary battery electrode that enables a balance of high levels of close adherence of an obtained electrode mixed material layer to a current collector and output characteristics and cycle characteristics of an obtained secondary battery.

Moreover, according to the present disclosure, it is possible to provide an electrode for a non-aqueous secondary battery that includes an electrode mixed material layer having excellent close adherence to a current collector and that can cause a secondary battery to display high output characteristics and cycle characteristics.

Furthermore, according to the present disclosure, it is possible to provide a non-aqueous secondary battery that includes this electrode for a non-aqueous secondary battery.

### DETAILED DESCRIPTION

The following provides a detailed description of embodiments of the present disclosure.

The presently disclosed slurry composition for a non-aqueous secondary battery electrode (hereinafter, also referred to simply as a "slurry composition") can be used in formation of an electrode mixed material layer that is included in an electrode (electrode for a non-aqueous secondary battery) of a non-aqueous secondary battery such as a lithium ion secondary battery. Moreover, a feature of the presently disclosed non-aqueous secondary battery (hereinafter, also referred to simply as a "secondary battery") is that an electrode for a non-aqueous secondary battery (hereinafter, also referred to simply as an "electrode") including an electrode mixed material layer that has been formed from the presently disclosed slurry composition for a non-aqueous secondary battery electrode is used therein.

### (Slurry composition for non-aqueous secondary battery electrode)

The presently disclosed slurry composition contains an olivine-type lithium phosphate compound and a water-soluble polymer. Moreover, in the presently disclosed slurry composition, the volume-average particle diameter D50 of the olivine-type lithium phosphate compound and the average hydrodynamic radius of the water-soluble polymer are within specific ranges. Through the presently disclosed slurry composition set forth above, it is possible to achieve a balance of high levels of close adherence of an obtained electrode mixed material layer to a current collector and output characteristics and cycle characteristics of a non-aqueous secondary battery. Although the reason for this is not clear, it is presumed that by optimizing the average hydrodynamic radius of the water-soluble polymer that is used in combination with the olivine-type lithium phosphate compound having a specific volume-average particle diameter D50, the olivine-type lithium phosphate compound can be covered by the water-soluble polymer in a good manner in an electrode mixed material layer.

Note that the presently disclosed slurry composition can further contain a particulate polymer as a binder, a conductive material, and a dispersion medium. Moreover, the presently disclosed slurry composition may optionally further contain components other than those mentioned above (i.e., other components).

### <Olivine-type lithium phosphate compound>

The olivine-type lithium phosphate compound is a material that can function as an electrode active material in an electrode mixed material layer formed using the slurry composition. Specifically, the olivine-type lithium phosphate compound is a material that can function well as a positive electrode active material of a secondary battery. The olivine-type lithium phosphate compound may be an olivine-type lithium phosphate compound represented by Li_{y}MdPO₄ such as olivine-type lithium iron phosphate (LiFePO₄), olivine-type lithium manganese phosphate (LiMnPO₄), or olivine-type lithium manganese iron phosphate (LiMn₁₋ₓFeₓPO₄; 0 < x < 1), where Md represents one or more types of transition metals having an average oxidation state of 3+, examples of which include Mn, Fe, and Co, and y represents a number satisfying 0 ≤ y ≤ 2. Md of the olivine-type lithium phosphate compound represented by Li_{y}MdPO₄ may be partly substituted with another metal. Examples of possible substituting metals include Cu, Mg, Zn, V, Ca, Sr, Ba, Ti, Al, Si, B, and Mo. Of these olivine-type lithium phosphate compounds, olivine-type lithium iron phosphate (LiFePO₄) is preferable from a viewpoint of even further enhancing cycle characteristics of an obtained electrochemical device.

The olivine-type lithium phosphate compound that is contained in the presently disclosed slurry composition is particles having a volume-average particle diameter D50 of not less than 0.5 µm and not more than 3.0 µm. The volume-average particle diameter D50 of the olivine-type lithium phosphate compound is preferably 0.7 µm or more, and more preferably 0.9 µm or more, and is preferably 2.5 µm or less, and more preferably 2.0 µm or less. When the volume-average particle diameter D50 of the olivine-type lithium phosphate compound is not less than any of the lower limits set forth above, close adherence of an obtained electrode mixed material layer to a current collector can be increased. Moreover, when the volume-average particle diameter D50 of the olivine-type lithium phosphate compound is not more than any of the upper limits set forth above, output characteristics of an obtained secondary battery can be enhanced.

The proportional content of the olivine-type lithium phosphate compound in the slurry composition is preferably not less than 90 mass% and not more than 99 mass% when all solid content contained in the slurry composition is taken to be 100 mass%, for example. When the proportional content of the electrode active material in the slurry composition is not less than the lower limit set forth above, energy density of a secondary battery can be improved. On the other hand, when the proportional content of the electrode active material in the slurry composition is not more than the upper limit set forth above, close adherence of an electrode mixed material layer formed using the slurry composition to a current collector can be increased.

### <Water-soluble polymer>

The water-soluble polymer that is contained in the presently disclosed slurry composition is a component that can function as a dispersant for causing good dispersion of components such as the electrode active material and the conductive material in the slurry composition. In addition, the water-soluble polymer can also function as a binder in an electrode mixed material layer that has been formed using the slurry composition.

### <<Average hydrodynamic radius of water-soluble polymer>>

The water-soluble polymer has an average hydrodynamic radius of not less than 10 nm and not more than 30 nm. Moreover, the average hydrodynamic radius of the water-soluble polymer is preferably 12 nm or more, and more preferably 14 nm or more, and is preferably 28 nm or less, and more preferably 26 nm or less. When the average hydrodynamic radius of the water-soluble polymer is not less than any of the lower limits set forth above, adhesive strength of an obtained electrode mixed material layer to a current collector can be increased, and cycle characteristics of an obtained secondary battery can also be enhanced. In a situation in which the average hydrodynamic radius of the water-soluble polymer is less than any of the lower limits set forth above, the average hydrodynamic radius of the water-soluble polymer is thought to be too small relative to the olivine-type lithium phosphate compound, resulting in insufficient coverage of the olivine-type lithium phosphate compound by the water-soluble polymer. With regards to cycle characteristics, in a situation in which the average hydrodynamic radius of the water-soluble polymer is less than any of the lower limits set forth above, it is thought that coverage of the olivine-type lithium phosphate compound by the water-soluble polymer is insufficient, that expansion of the olivine-type lithium phosphate compound in accompaniment to repeated charging and discharging cannot be sufficiently suppressed, and that swelling of an electrode mixed material layer occurs. Moreover, when the average hydrodynamic radius of the water-soluble polymer is not more than any of the upper limits set forth above, deterioration of output characteristics of an obtained secondary battery can be inhibited. This is presumed to be because excessive coverage of the olivine-type lithium phosphate compound by the water-soluble polymer can be inhibited when the average hydrodynamic radius of the water-soluble polymer is not more than any of the upper limits set forth above.

The average hydrodynamic radius of the water-soluble polymer can be controlled through factors such as the molecular weight and chemical composition of the water-soluble polymer, and the pH of an environment in which the water-soluble polymer is present, for example. More specifically, increasing the molecular weight of the water-soluble polymer tends to also increase the average hydrodynamic radius. Moreover, increasing the ratio of hydrophilic groups in the chemical composition of the water-soluble polymer tends to increase electrostatic repulsion in the polymer and increase spreading out of the polymer. Conversely, increasing the ratio of hydrophobic groups in the chemical composition of the water-soluble polymer tends to reduce spreading out of the polymer.

### <<Ratio of volume-average particle diameter D50 of olivine-type lithium phosphate compound and average hydrodynamic radius r of water-soluble polymer>>

A ratio of the volume-average particle diameter D50 of the olivine-type lithium phosphate compound and the average hydrodynamic radius r of the water-soluble polymer is preferably within a range of D50:r = 1:0.005 to 1:0.050 (i.e., 1:(not less than 0.005 and not more than 0.050)), more preferably within a range of D50:r = 1:(not less than 0.0075 and not more than 0.045), even more preferably within a range of 1:(not less than 0.010 and not more than 0.040), and particularly preferably within a range of 1:(not less than 0.020 and not more than 0.027). In a situation in which the ratio of the average hydrodynamic radius r of the water-soluble polymer relative to the volume-average particle diameter D50 of the olivine-type lithium phosphate compound is less than any of the lower limits set forth above (i.e., a situation in which the average hydrodynamic radius r of the water-soluble polymer relative to the size of the olivine-type lithium phosphate compound falls below the lower limit of any of the ranges set forth above), coverage of the olivine-type lithium phosphate compound by the water-soluble polymer may be insufficient, and swelling of an electrode mixed material layer and deterioration of cycle characteristics may occur due to repeated charge/discharge cycles of a secondary battery. There are also instances in which output characteristics of a secondary battery deteriorate. Moreover, in a situation in which the ratio of the average hydrodynamic radius r of the water-soluble polymer relative to the volume-average particle diameter D50 of the olivine-type lithium phosphate compound is more than any of the upper limits set forth above (i.e., a situation in which the average hydrodynamic radius r of the water-soluble polymer relative to the size of the olivine-type lithium phosphate compound exceeds the upper limit of any of the ranges set forth above), coverage of the olivine-type lithium phosphate compound by the water-soluble polymer may be excessive, and output characteristics of a secondary battery may deteriorate.

### <<Chemical composition of water-soluble polymer>>

No specific limitations are placed on the chemical composition of the water-soluble polymer so long as it satisfies the average hydrodynamic radius set forth above. The water-soluble polymer can include an acidic group-containing monomer unit, a non-hydroxy group-containing (meth)acrylic acid ester monomer unit, a hydroxy group-containing (meth)acrylic acid ester monomer unit, and so forth. In particular, it is preferable that the water-soluble polymer includes an acidic group-containing monomer unit or a non-hydroxy group-containing (meth)acrylic acid ester monomer unit, and more preferable that the water-soluble polymer includes both of these monomer units. Moreover, the water-soluble polymer may include other monomer units besides the monomer units listed above.

### -Acidic group-containing monomer unit-

Examples of acidic group-containing monomers that can form the acidic group-containing monomer unit in the water-soluble polymer include carboxy group-containing monomers, sulfo group-containing monomers, and phosphate group-containing monomers.

Examples of carboxy group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, α-chloro-β-E-methoxyacrylic acid, and β-diaminoacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid esters such as methyl allyl maleate, diphenyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Furthermore, an acid anhydride that produces a carboxy group upon hydrolysis can also be used as a carboxy group-containing monomer.

Other examples include monoesters and diesters of α,β-ethylenically unsaturated polybasic carboxylic acids such as monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, and dibutyl itaconate.

Note that a hydrogen atom in a carboxy group of a carboxy group-containing monomer such as described above may have been substituted by an inorganic ion or an organic ion such that the monomer is in the form of an inorganic salt or an organic salt. In other words, the carboxy group-containing monomer may be in the form of a carboxylate salt.

Examples of sulfo group-containing monomers include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid.

Note that a hydrogen atom in a sulfo group of a sulfo group-containing monomer such as described above may have been substituted by an inorganic ion or an organic ion such that the monomer is in the form of an inorganic salt or an organic salt. In other words, the sulfo group-containing monomer may be in the form of a sulfonate salt.

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

Note that a hydrogen atom in a phosphate group of a phosphate group-containing monomer such as described above may have been substituted by an inorganic ion or an organic ion such that the monomer is in the form of an inorganic salt or an organic salt. In other words, the phosphate group-containing monomer may be in the form of a phosphate salt.

One of these acidic group-containing monomers may be used individually, or two or more of these acidic group-containing monomers may be used in a freely selected ratio.

Moreover, from a viewpoint of further improving close adherence of a formed electrode mixed material layer to a current collector, it is preferable to use a carboxy group-containing monomer or a sulfo group-containing monomer, more preferable to use a carboxy group-containing monomer, and even more preferable to use acrylic acid as an acidic group-containing monomer.

The proportional content of the acidic group-containing monomer unit in the water-soluble polymer when all monomer units (all repeating units) included in the water-soluble polymer are taken to be 100 mass% is preferably 3.0 mass% or more, more preferably 4.0 mass% or more, and even more preferably 5.0 mass% or more, and is preferably 40.0 mass% or less, more preferably 30.0 mass% or less, and even more preferably 20.0 mass% or less.

When the proportional content of the acidic group-containing monomer unit in the water-soluble polymer is not less than any of the lower limits set forth above, dispersibility of the slurry composition can be improved, presumably due to increased interactions between the water-soluble polymer and the olivine-type lithium phosphate compound. As a result, output characteristics of an obtained secondary battery can be enhanced. On the other hand, when the proportional content of the acidic group-containing monomer unit in the water-soluble polymer is not more than any of the upper limits set forth above, flexibility of an electrode mixed material layer that is formed using the slurry composition can be improved, presumably due to increased flexibility of molecular chains of the water-soluble polymer. As a result, cracking of the electrode mixed material layer in accompaniment to repeated charge/discharge cycles of a secondary battery can be effectively inhibited, and cycle characteristics of the secondary battery can be enhanced.

### -Non-hydroxy group-containing (meth)acrylic acid ester monomer unit-

The non-hydroxy group-containing (meth)acrylic acid ester monomer unit is a repeating unit that is derived from a non-hydroxy group-containing (meth)acrylic acid ester monomer. The non-hydroxy group-containing (meth)acrylic acid ester monomer unit may be a non-hydroxy group-containing (meth)acrylic acid alkyl ester monomer unit or a monomer unit derived from a monomer represented by the following formula (I). It is preferable that the water-soluble polymer includes either or both of a non-hydroxy group-containing (meth)acrylic acid alkyl ester monomer unit and a monomer unit derived from a monomer represented by the following formula (I) as the non-hydroxy group-containing (meth)acrylic acid ester monomer unit. In this case, cycle characteristics of an obtained secondary battery can be even further enhanced. Moreover, from a viewpoint of even further enhancing output characteristics of an obtained secondary battery, it is preferable that the water-soluble polymer includes both a non-hydroxy group-containing (meth)acrylic acid alkyl ester monomer unit and a monomer unit derived from a monomer represented by the following formula (I). 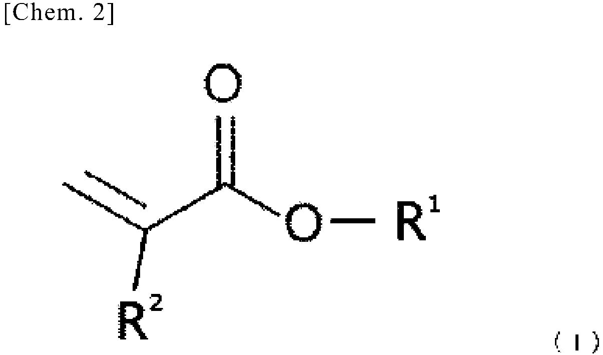 (In formula (I), R¹ is a non-hydroxy group-containing organic group that includes at least one ether bond, and R² is a hydrogen atom or a methyl group.)

A (meth)acrylic acid alkyl ester that does not include a hydroxy group such as methyl (meth)acrylate, ethyl (meth)acrylate, butyl (meth)acrylate, or 2-ethylhexyl (meth)acrylate can be used as a non-hydroxy group-containing (meth)acrylic acid alkyl ester monomer. One of these non-hydroxy group-containing (meth)acrylic acid alkyl ester monomers may be used individually, or two or more of these non-hydroxy group-containing (meth)acrylic acid alkyl ester monomers may be used in a freely selected ratio. Of these non-hydroxy group-containing (meth)acrylic acid alkyl ester monomers, methyl (meth)acrylate and ethyl (meth)acrylate are preferable, and methyl (meth)acrylate is more preferable.

The proportional content of the non-hydroxy group-containing (meth)acrylic acid alkyl ester monomer unit in the water-soluble polymer when all monomer units (all repeating units) included in the water-soluble polymer are taken to be 100 mass% is preferably 2.0 mass% or more, more preferably 3.5 mass% or more, and even more preferably 5.0 mass% or more, and is preferably 15.0 mass% or less, more preferably 13.5 mass% or less, and even more preferably 12.0 mass% or less. When the proportional content of the non-hydroxy group-containing (meth)acrylic acid alkyl ester monomer unit in the water-soluble polymer is not less than any of the lower limits set forth above, flexibility of an electrode mixed material layer that is formed using the slurry composition can be improved, presumably because reduction of flexibility of molecular chains of the water-soluble polymer can be inhibited. As a result, cracking of the electrode mixed material layer in accompaniment to repeated charge/discharge cycles of a secondary battery can be effectively inhibited, and cycle characteristics of the secondary battery can be enhanced. When the proportional content of the non-hydroxy group-containing (meth)acrylic acid alkyl ester monomer unit in the water-soluble polymer is not more than any of the upper limits set forth above, an excessive increase of the amount of alkyl groups in the polymer and reduction of water solubility of the polymer can be inhibited, and, as a result, reduction of close adherence of an electrode mixed material layer to a current collector can be inhibited.

### -Monomer unit derived from monomer represented by formula (I)-

The monomer unit derived from a monomer represented by formula (I) is a monomer unit that is derived from a monomer represented by formula (I). Examples of monomers represented by formula (I) include 2-methoxyethyl acrylate for which R¹ is -CH₂CH₂OCH₃ and R² is a hydrogen atom in formula (I); methoxy (poly)ethylene glycol acrylate for which R¹ is -(CH₂CH₂O)ₙCH₃ (n is an integer of 1 to 13) and R² is a hydrogen atom in formula (I); and phenoxy (poly)ethylene glycol acrylate for which R¹ is -(OCH₂CH₂)ₙOph (n is an integer of 1 to 2, with n = 2 being preferable, and ph indicates a phenyl group) and R² is a hydrogen atom in formula (I). Of these monomers, methoxy polyethylene glycol acrylate and 2-methoxyethyl acrylate are preferable, and 2-methoxyethyl acrylate is more preferable.

The proportional content of the monomer unit derived from a monomer represented by formula (I) in the water-soluble polymer when all monomer units (all repeating units) included in the water-soluble polymer are taken to be 100 mass% is preferably 5.0 mass% or more, more preferably 6.5 mass% or more, and even more preferably 8.0 mass% or more, and is preferably 15.0 mass% or less, more preferably 13.5 mass% or less, and even more preferably 12.0 mass% or less. When the proportional content of the monomer unit derived from a monomer represented by formula (I) in the water-soluble polymer is not less than any of the lower limits set forth above, flexibility of an electrode mixed material layer that is formed using the slurry composition can be improved, presumably because reduction of flexibility of molecular chains of the water-soluble polymer can be inhibited. As a result, cracking of the electrode mixed material layer in accompaniment to repeated charge/discharge cycles of a secondary battery can be effectively inhibited, and cycle characteristics of the secondary battery can be enhanced. When the proportional content of the monomer unit derived from a monomer represented by formula (I) in the water-soluble polymer is not more than any of the upper limits set forth above, dispersion stability of the olivine-type lithium phosphate compound in the slurry composition can be increased, presumably because deterioration of wettability with the olivine-type lithium phosphate compound can be inhibited, and, as a result, output characteristics of an obtained secondary battery can be enhanced.

### -Hydroxy group-containing (meth)acrylic acid ester monomer unit-

The water-soluble polymer can further include a hydroxy group-containing (meth)acrylic acid ester monomer unit. When the water-soluble polymer further includes a hydroxy group-containing (meth)acrylic acid ester monomer unit, close adherence of an electrode mixed material layer formed using the slurry composition to a current collector can be improved, presumably due to hydroxy group interactions between molecules of the water-soluble polymer. Moreover, when the water-soluble polymer further includes a hydroxy group-containing (meth)acrylic acid ester monomer unit, flexibility of the electrode mixed material layer can also be improved, presumably due to further increased flexibility of molecular chains of the water-soluble polymer.

Examples of hydroxy group-containing acrylic acid ester monomers that can form a hydroxy group-containing acrylic acid ester monomer unit in the water-soluble polymer include alkanol esters of acrylic acid (also referred to as "acrylic acid hydroxyalkyl ester monomers") such as 2-hydroxyethyl acrylate, 2-hydroxypropyl acrylate, and 4-hydroxybutyl acrylate; and esters of acrylic acid and polyalkylene glycol (also referred to as "acrylic acid polyalkylene glycol ester monomers") represented by a general formula: CH₂=CH-COO-(C_{q}H_{2q}O)ₚ-H (where p indicates an integer of 2 to 9 and q indicates an integer of 2 to 4). Note that one of these hydroxy group-containing acrylic acid ester monomers may be used individually, or two or more of these hydroxy group-containing acrylic acid ester monomers may be used in a freely selected ratio.

Of these examples, it is preferable to use an alkanol ester of acrylic acid (acrylic acid hydroxyalkyl ester monomer) such as 2-hydroxyethyl acrylate, 2-hydroxypropyl acrylate, or 4-hydroxybutyl acrylate as a hydroxy group-containing acrylic acid ester monomer.

Examples of hydroxy group-containing methacrylic acid ester monomers that can form a hydroxy group-containing methacrylic acid ester monomer unit in the water-soluble polymer include alkanol esters of methacrylic acid (also referred to as "methacrylic acid hydroxyalkyl ester monomers") such as 2-hydroxyethyl methacrylate and 2-hydroxypropyl methacrylate; and esters of methacrylic acid and polyalkylene glycol (also referred to as "methacrylic acid polyalkylene glycol ester monomers") represented by a general formula: CH₂=C(CH₃)-COO-(CₛH₂ₛO)ᵣ-H (where r indicates an integer of 2 to 9 and s indicates an integer of 2 to 4). Note that one of these hydroxy group-containing methacrylic acid ester monomers may be used individually, or two or more of these hydroxy group-containing methacrylic acid ester monomers may be used in a freely selected ratio.

Of these examples, it is preferable to use an alkanol ester of methacrylic acid (methacrylic acid hydroxyalkyl ester monomer) such as 2-hydroxyethyl methacrylate or 2-hydroxypropyl methacrylate as a hydroxy group-containing methacrylic acid ester monomer.

The proportional content of the hydroxy group-containing (meth)acrylic acid ester monomer unit in the water-soluble polymer when all monomer units (all repeating units) included in the water-soluble polymer are taken to be 100 mass% is preferably 30.0 mass% or more, more preferably 43.0 mass% or more, and even more preferably 56.0 mass% or more, and is preferably 90.0 mass% or less, preferably 86.0 mass% or less, and more preferably 81.5 mass% or less.

When the proportional content of the hydroxy group-containing (meth)acrylic acid ester monomer unit in the water-soluble polymer is not less than any of the lower limits set forth above, close adherence of an electrode mixed material layer formed using the slurry composition to a current collector can be improved, presumably due to increased hydroxy group interactions between molecules of the water-soluble polymer. Moreover, when the proportional content of the hydroxy group-containing (meth)acrylic acid ester monomer unit in the water-soluble polymer is not less than any of the lower limits set forth above, flexibility of the electrode mixed material layer can also be improved, presumably due to even further increased flexibility of molecular chains of the water-soluble polymer. On the other hand, when the proportional content of the hydroxy group-containing (meth)acrylic acid ester monomer unit in the water-soluble polymer is not more than any of the upper limits set forth above, an excessive increase of flexibility of molecular chains of the water-soluble polymer can be avoided, and close adherence of the electrode mixed material layer to a current collector can be increased.

### <<Production method of water-soluble polymer>>

The water-soluble polymer can, for example, be produced as described below, but is not specifically limited to being produced in this manner.

The various monomers described above, etc. are mixed in a solvent such as water. A polymerization accelerator is added to the resultant mixture. Thereafter, a polymerization initiator is added so as to initiate a polymerization reaction. Cycles of supplemental addition of a polymerization accelerator, supplemental addition of a polymerization initiator, and polymerization may subsequently be performed once, twice, or more, as necessary. The polymerization temperature when the polymerization initiator is added to initiate the polymerization reaction is preferably not lower than 35°C and not higher than 65°C, and more preferably not lower than 40°C and not higher than 55°C, for example. Moreover, the polymerization reaction time between addition of the polymerization initiator and addition of the polymerization accelerator is preferably not less than 5 minutes and not more than 40 minutes, and more preferably not less than 10 minutes and not more than 30 minutes, for example. The operations described above are preferably performed in a nitrogen atmosphere. Also, a chain transfer agent may be used as a polymerization aid in the polymerization reaction. After the polymerization reaction, a reaction inhibitor is used to end the polymerization reaction. Next, the product is cooled, is placed in an air atmosphere, and is then preferably adjusted to a pH of not lower than 7.0 and not higher than 9.0 through addition of lithium hydroxide aqueous solution or the like. This makes it possible to maintain a suitable degree of spreading out of the water-soluble polymer and to keep the average hydrodynamic radius at a suitable level.

A known polymerization initiator can be used as the polymerization initiator without any specific limitations. The polymerization initiator may be potassium persulfate, sodium persulfate, ammonium persulfate, or the like, for example. Of these polymerization initiators, potassium persulfate is preferable. In a case in which a plurality of additions of a polymerization initiator are made, the added polymerization initiator may be the same or different in each addition.

Note that the amount of the polymerization initiator that is used can be adjusted as appropriate within a range that yields the desired effects according to the present disclosure.

The polymerization accelerator may be L-ascorbic acid, sodium hydrogen sulfite, or the like, for example. In a case in which a plurality of additions of a polymerization accelerator are made, the added polymerization accelerator may be the same or different in each addition. In particular, it is preferable that L-ascorbic acid as a polymerization accelerator is present in the polymerization system at the start of the polymerization reaction.

Note that the amount of the polymerization accelerator that is used can be adjusted as appropriate within a range that yields the desired effects according to the present disclosure.

### <<Weight-average molecular weight (Mw)>>

The weight-average molecular weight (Mw) of the water-soluble polymer is preferably 10,000 or more, more preferably 50,000 or more, and even more preferably 100,000 or more, and is preferably 1,000,000 or less, more preferably 750,000 or less, and even more preferably 500,000 or less. When the weight-average molecular weight (Mw) of the water-soluble polymer is not less than any of the lower limits set forth above, close adherence of an electrode mixed material layer formed using the slurry composition to a current collector can be even further improved. On the other hand, when the weight-average molecular weight (Mw) of the water-soluble polymer is not more than any of the upper limits set forth above, dispersibility of the slurry composition can be improved, and cycle characteristics of an obtained secondary battery can be enhanced.

Note that the weight-average molecular weight (Mw) of the water-soluble polymer can be controlled through polymerization conditions in the production method of the water-soluble polymer described above. Specifically, the weight-average molecular weight (Mw) of the water-soluble polymer can be controlled through the type and additive amount of a polymerization initiator, a polymerization accelerator, a chain transfer agent, or the like, the time and temperature of the polymerization reaction, and so forth.

### <<Content of water-soluble polymer in slurry composition>>

The content of the water-soluble polymer in the slurry composition can be adjusted as appropriate within a range that yields the desired effects according to the present disclosure, but is preferably not less than 0.1 parts by mass and not more than 5 parts by mass relative to 100 parts by mass of the olivine-type lithium phosphate compound, for example. Moreover, the proportional content of the water-soluble polymer when all solid content contained in the slurry composition is taken to be 100 mass% can be not less than 0.1 mass% and not more than 5 mass%, preferably not less than 0.1 mass% and not more than 3 mass%, and more preferably not less than 0.1 mass% and not more than 1 mass%. When the content of the water-soluble polymer in the slurry composition is not less than the lower limit set forth above, dispersibility of the slurry composition and close adherence of a formed electrode mixed material layer to a current collector can be further improved. On the other hand, when the content of the water-soluble polymer in the slurry composition is not more than any of the upper limits set forth above, output characteristics of a secondary battery can be enhanced.

### <Particulate polymer as binder>

The particulate polymer as a binder is a component that can function as a binder in an electrode mixed material layer. Note that the particulate polymer is considered to be a different polymer to the previously described water-soluble polymer.

The particulate polymer is normally water-insoluble. Note that when a polymer is said to be "water-insoluble" in the present disclosure, this means that when 0.5 g (in terms of solid content) of the polymer is dissolved in 100 g of water at a temperature of 25°C, the amount of insoluble content is 90 mass% or more.

The particulate polymer preferably includes a hydrophilic group. By using a particulate polymer that includes a hydrophilic group (hydrophilic group-containing particulate polymer) as the particulate polymer, it is possible to further improve dispersibility of the slurry composition and adhesiveness and flexibility of a formed electrode mixed material layer.

No specific limitations are placed on the method by which the hydrophilic group is introduced into the particulate polymer. For example, a method in which a hydrophilic group-containing monomer is used in polymerization of the particulate polymer so as to form a hydrophilic group-containing monomer unit in the obtained particulate polymer can be adopted.

### <<Hydrophilic group-containing monomer unit>>

Examples of hydrophilic group-containing monomers that can form the hydrophilic group-containing monomer unit in the particulate polymer include acidic group-containing monomers such as carboxy group-containing monomers, sulfo group-containing monomers, and phosphate group-containing monomers and also hydroxy group-containing monomers and the like.

Any of the various acidic group-containing monomers that can be used in production of the previously described water-soluble polymer can be used as an acidic group-containing monomer (carboxy group-containing monomer, sulfo group-containing monomer, phosphate group-containing monomer, etc.).

Examples of hydroxy group-containing monomers include alkanol esters of ethylenically unsaturated carboxylic acids such as 2-hydroxyethyl acrylate, 2-hydroxypropyl acrylate, 2-hydroxyethyl methacrylate, 2-hydroxypropyl methacrylate, di-2-hydroxyethyl maleate, di-4-hydroxybutyl maleate, and di-2-hydroxypropyl itaconate; esters of (meth)acrylic acid and polyalkylene glycol represented by a general formula: CH₂=CR¹-COO-(C_{q}H_{2q}O)ₚ-H (where p represents an integer of 2 to 9, q represents an integer of 2 to 4, and R¹ represents hydrogen or a methyl group); mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; and (meth)allyl thioethers of alkylene glycols such as (meth)allyl-2-hydroxyethyl thioether and (meth)allyl-2-hydroxypropyl thioether.

In the present disclosure, "(meth)allyl" is used to indicate "allyl" and/or "methallyl", and "(meth)acryloyl" is used to indicate "acryloyl" and/or "methacryloyl".

One of the above-described hydrophilic group-containing monomers may be used individually, or two or more of the above-described hydrophilic group-containing monomers may be used together in a freely selected ratio.

Moreover, it is preferable to use an acidic group-containing monomer (carboxy group-containing monomer, sulfo group-containing monomer, phosphate group-containing monomer, etc.) as a hydrophilic group-containing monomer from a viewpoint of even further improving dispersibility of the slurry composition and adhesiveness of a formed electrode mixed material layer, and it is more preferable to use an acidic group-containing monomer and a hydroxy group-containing monomer together, and even more preferable to use a carboxy group-containing monomer and a hydroxy group-containing monomer together as hydrophilic group-containing monomers from a viewpoint of even further improving close adherence of a formed electrode mixed material layer.

### -Proportional content-

The proportional content of the hydrophilic group-containing monomer unit in the particulate polymer when all monomer units included in the particulate polymer are taken to be 100 mass% is preferably not less than 1 mass% and not more than 10 mass%. When the proportional content of the hydrophilic group-containing monomer unit in the particulate polymer is within the specific range set forth above, dispersibility of the slurry composition and adhesiveness and flexibility of a formed electrode mixed material layer can be even further improved.

In a case in which the particulate polymer includes both an acidic group-containing monomer unit (carboxy group-containing monomer unit, sulfo group-containing monomer unit, phosphate group-containing monomer unit, etc.) and a hydroxy group-containing monomer unit together as the hydrophilic group-containing monomer unit, the proportional content of the hydrophilic group-containing monomer unit (i.e., the total proportional content of the acidic group-containing monomer unit and the hydroxy group-containing monomer unit) in the particulate polymer when all monomer units included in the particulate polymer are taken to be 100 mass% is more preferably 2 mass% or more, and even more preferably 3 mass% or more, and is more preferably 5 mass% or less, and even more preferably 4 mass% or less. When the total proportional content of the acidic group-containing monomer unit and the hydroxy group-containing monomer unit in the particulate polymer is within any of the specific ranges set forth above, dispersibility of the slurry composition and adhesiveness and flexibility of a formed electrode mixed material layer can be yet further improved.

In a case in which the particulate polymer includes an acidic group-containing monomer unit (carboxy group-containing monomer unit, sulfo group-containing monomer unit, phosphate group-containing monomer unit, etc.) as the hydrophilic group-containing monomer unit, the proportional content of the acidic group-containing monomer unit in the particulate polymer when all monomer units included in the particulate polymer are taken to be 100 mass% is preferably 0.5 mass% or more, more preferably 1 mass% or more, and even more preferably 1.5 mass% or more, and is preferably 5 mass% or less, more preferably 3 mass% or less, and even more preferably 2.5 mass% or less. When the proportional content of the acidic group-containing monomer unit in the particulate polymer is not less than any of the lower limits set forth above, dispersibility of the slurry composition and adhesiveness of a formed electrode mixed material layer can be even further improved. On the other hand, when the proportional content of the acidic group-containing monomer unit in the particulate polymer is not more than any of the upper limits set forth above, flexibility of a formed electrode mixed material layer can be increased.

In a case in which the particulate polymer includes a hydroxy group-containing monomer unit as the hydrophilic group-containing monomer unit, the proportional content of the hydroxy group-containing monomer unit in the particulate polymer when all monomer units included in the particulate polymer are taken to be 100 mass% is preferably 0.5 mass% or more, and more preferably 1 mass% or more, and is preferably 5 mass% or less, more preferably 2 mass% or less, and even more preferably 1.5 mass% or less. When the proportional content of the hydroxy group-containing monomer unit in the particulate polymer is not less than any of the lower limits set forth above, flexibility of a formed electrode mixed material layer can be even further improved. On the other hand, when the proportional content of the hydroxy group-containing monomer unit in the particulate polymer is not more than any of the upper limits set forth above, dispersibility of the slurry composition and adhesiveness of a formed electrode mixed material layer can be increased.

### <<Type of particulate polymer>>

It is preferable to use a hydrophilic group-containing acrylic polymer or a hydrophilic group-containing conjugated diene polymer, for example, as the particulate polymer including a hydrophilic group, and more preferable to use a hydrophilic group-containing acrylic polymer as the particulate polymer including a hydrophilic group from a viewpoint of enhancing cycle characteristics of a secondary battery.

### -Hydrophilic group-containing acrylic polymer-

The hydrophilic group-containing acrylic polymer is a copolymer that includes at least a (meth)acrylic acid ester monomer unit in addition to the hydrophilic group-containing monomer unit described above. The hydrophilic group-containing acrylic polymer preferably further includes a nitrile group-containing monomer unit. Moreover, the hydrophilic group-containing acrylic polymer may further include monomer units other than the hydrophilic group-containing monomer unit, the (meth)acrylic acid ester monomer unit, and the nitrile group-containing monomer unit.

The proportional content of the hydrophilic group-containing monomer unit in the hydrophilic group-containing acrylic polymer can be set within any of the same ranges as the preferred ranges for the proportional content of the hydrophilic group-containing monomer unit in the polymer described above.

Examples of (meth)acrylic acid ester monomers that can form the (meth)acrylic acid ester monomer unit in the hydrophilic group-containing acrylic polymer include (meth)acrylic acid alkyl esters such as methyl acrylate, ethyl acrylate, butyl acrylate, methyl methacrylate, ethyl methacrylate, and 2-ethylhexyl acrylate. Note that one of these (meth)acrylic acid ester monomers may be used individually, or two or more of these (meth)acrylic acid ester monomers may be used in a freely selected ratio.

The proportional content of the (meth)acrylic acid ester monomer unit in the hydrophilic group-containing acrylic polymer when all monomer units included in the hydrophilic group-containing acrylic polymer are taken to be 100 mass% is preferably 50 mass% or more, more preferably 60 mass% or more, and even more preferably 70 mass% or more, and is preferably 90 mass% or less, more preferably 85 mass% or less, and even more preferably 80 mass% or less. When the proportional content of the (meth)acrylic acid ester monomer unit in the hydrophilic group-containing acrylic polymer is within any of the specific ranges set forth above, adhesiveness and flexibility of a formed electrode mixed material layer can be even further improved.

Any of the previously described nitrile group-containing monomers that can be used to form the water-soluble polymer can be used as a nitrile group-containing monomer that can form the nitrile group-containing monomer unit in the hydrophilic group-containing acrylic polymer.

The proportional content of the nitrile group-containing monomer unit in the hydrophilic group-containing acrylic polymer when all monomer units included in the hydrophilic group-containing acrylic polymer are taken to be 100 mass% is preferably 5 mass% or more, more preferably 10 mass% or more, and even more preferably 17 mass% or more, and is preferably 40 mass% or less, more preferably 35 mass% or less, and even more preferably 26 mass% or less. When the proportional content of the nitrile group-containing monomer unit in the hydrophilic group-containing acrylic polymer is within any of the specific ranges set forth above, adhesiveness and flexibility of a formed electrode mixed material layer can be even further improved.

### -Hydrophilic group-containing conjugated diene polymer-

The hydrophilic group-containing conjugated diene polymer is a copolymer that includes a conjugated diene monomer unit in addition to the hydrophilic group-containing monomer unit described above.

Specific examples of the conjugated diene polymer include, but are not specifically limited to, a copolymer that includes a hydrophilic group-containing monomer unit, an aromatic vinyl monomer unit, and an aliphatic conjugated diene monomer unit such as a hydrophilic group-containing styrene-butadiene copolymer (hydrophilic group-containing SBR), hydrophilic group-containing butadiene rubber (hydrophilic group-containing BR) (copolymer including a hydrophilic group-containing monomer unit and a butadiene unit), hydrophilic group-containing acrylic rubber (hydrophilic group-containing NBR) (copolymer including a hydrophilic group-containing monomer unit, an acrylonitrile unit, and a butadiene unit), and hydrogenated products thereof. One of these conjugated diene polymers may be used individually, or two or more of these conjugated diene polymers may be used in a freely selected ratio.

In particular, it is preferable to use a copolymer that includes a hydrophilic group-containing monomer unit, an aromatic vinyl monomer unit, and an aliphatic conjugated diene monomer unit such as a hydrophilic group-containing styrene-butadiene copolymer (hydrophilic group-containing SBR) from a viewpoint of even further improving adhesiveness and flexibility of a formed electrode mixed material layer.

The proportional content of the hydrophilic group-containing monomer unit in the hydrophilic group-containing conjugated diene polymer can be set within any of the same ranges as the preferred ranges for the proportional content of the hydrophilic group-containing monomer unit in the polymer described above.

Examples of conjugated diene monomers that can form the conjugated diene monomer unit in the hydrophilic group-containing conjugated diene polymer include conjugated diene compounds such as 1,3-butadiene, isoprene, 2,3-dimethyl-1,3-butadiene, and 1,3-pentadiene. One of these conjugated diene monomers may be used individually, or two or more of these conjugated diene monomers may be used in a freely selected ratio. Of these conjugated diene monomers, 1,3-butadiene is preferable.

The proportional content of the conjugated diene monomer unit in the hydrophilic group-containing conjugated diene polymer when all monomer units included in the hydrophilic group-containing conjugated diene polymer are taken to be 100 mass% is preferably 15 mass% or more, more preferably 20 mass% or more, and even more preferably 25 mass% or more, and is preferably 60 mass% or less, more preferably 50 mass% or less, and even more preferably 40 mass% or less. When the proportional content of the conjugated diene monomer unit in the hydrophilic group-containing conjugated diene polymer is within any of the specific ranges set forth above, adhesiveness and flexibility of a formed electrode mixed material layer can be yet further improved.

Examples of aromatic vinyl monomers that can form the aromatic vinyl monomer unit in the hydrophilic group-containing conjugated diene polymer include styrene, α-methylstyrene, vinyltoluene, and divinylbenzene. One of these aromatic vinyl monomers may be used individually, or two or more of these aromatic vinyl monomers may be used a freely selected ratio. Of these aromatic vinyl monomers, styrene is preferable.

The proportional content of the aromatic vinyl monomer unit in the hydrophilic group-containing conjugated diene polymer when all monomer units included in the hydrophilic group-containing conjugated diene polymer are taken to be 100 mass% is preferably 30 mass% or more, more preferably 45 mass% or more, and even more preferably 56 mass% or more, and is preferably 80 mass% or less, more preferably 75 mass% or less, and even more preferably 71 mass% or less. When the proportional content of the aromatic vinyl monomer unit in the hydrophilic group-containing conjugated diene polymer is within any of the specific ranges set forth above, adhesiveness and flexibility of a formed electrode mixed material layer can be yet further improved.

### <<Production method of particulate polymer>>

No specific limitations are placed on the method by which the particulate polymer is polymerized. For example, a method such as solution polymerization, suspension polymerization, bulk polymerization, or emulsion polymerization may be adopted. Moreover, addition polymerization such as ionic polymerization, radical polymerization, or living radical polymerization can be adopted as the polymerization reaction. The polymerization may be carried out with a commonly used emulsifier, dispersant, polymerization initiator, chain transfer agent, or the like, and the amount thereof may also be the same as commonly used.

### <<Volume-average particle diameter of particulate polymer>>

The volume-average particle diameter of the particulate polymer is preferably 100 nm or more, and more preferably 110 nm or more, and is preferably 250 nm or less, and more preferably 180 nm or less. When the volume-average particle diameter of the particulate polymer is not less than any of the lower limits set forth above, close adherence of an obtained electrode mixed material layer to a current collector can be even further increased. Moreover, when the volume-average particle diameter of the particulate polymer is not more than any of the upper limits set forth above, output characteristics of an obtained secondary battery can be even further enhanced. Note that the volume-average particle diameter of the particulate polymer can be measured by a measurement method described in the EXAMPLES section of the present specification.

### <<Proportional content in slurry composition>>

Although the proportional content of the particulate polymer in the slurry composition can be adjusted as appropriate within a range that yields the desired effects according to the present disclosure, the proportional content of the particulate polymer is preferably set as not less than 0.1 mass% and not more than 5 mass%, more preferably not less than 0.1 mass% and not more than 3 mass%, and even more preferably not less than 0.1 mass% and not more than 2 mass% when all solid content contained in the slurry composition is taken to be 100 mass%, for example. When the proportional content of the particulate polymer in the slurry composition is not less than the lower limit set forth above, adhesiveness of an electrode mixed material layer can be even further improved. On the other hand, when the proportional content of the particulate polymer in the slurry composition is not more than any of the upper limits set forth above, output characteristics of a secondary battery can be improved.

### <Conductive material>

The conductive material is a component having a function of contributing to electrical contact among an electrode active material in an electrode mixed material layer.

It is preferable that either or both of carbon nanotubes and a particulate conductive material are used as the conductive material, and more preferable that carbon nanotubes and a particulate conductive material are used together as the conductive material.

When either or both of carbon nanotubes and a particulate conductive material are used as the conductive material, output characteristics of a secondary battery can be improved. Moreover, when carbon nanotubes and a particulate conductive material are used together as the conductive material, output characteristics of a secondary battery can be improved while also further improving flexibility of an electrode mixed material layer.

Note that conductive materials other than the carbon nanotubes and the particulate conductive material (i.e., other conductive materials) may be used as the conductive material. For example, fibrous conductive materials other than carbon nanotubes can be used as other conductive materials.

### <<Carbon nanotubes>>

Carbon nanotubes can improve output characteristics of a secondary battery by forming electrical conduction paths in an electrode mixed material layer. Moreover, by using carbon nanotubes, it is also possible to improve cycle characteristics and low-temperature characteristics of a secondary battery.

Any carbon nanotubes (hereinafter, also abbreviated as "CNTs") that yield the desired effects according to the present disclosure can be used as the carbon nanotubes without any specific limitations. Carbon nanotubes may be single-walled (SW) carbon nanotubes or multi-walled (MW) carbon nanotubes depending on the wall format thereof. Moreover, the carbon nanotubes that can be used as the conductive material may be single-walled carbon nanotubes, multi-walled carbon nanotubes, or a combination thereof.

The average number of walls of the CNTs is preferably 10 or less, more preferably 9 or less, even more preferably 8 or less, further preferably 2 or less, and even further preferably 1.5 or less. When the average number of walls of the CNTs is not more than any of the upper limits set forth above, cycle characteristics of a secondary battery can be further improved.

Note that the lower limit for the average number of walls of the CNTs is not specifically limited but is normally 1 or more.

The average diameter of the CNTs is preferably 0.5 nm or more, more preferably 1 nm or more, even more preferably 1.5 nm or more, further preferably 2 nm or more, and even further preferably 2.5 nm or more, and is preferably 20 nm or less, more preferably 12 nm or less, even more preferably 8 nm or less, further preferably 6 nm or less, and even further preferably 4 nm or less. When the average diameter of the CNTs is not less than any of the lower limits set forth above, aggregation of the CNTs can be sufficiently inhibited, and dispersibility of the CNTs as the conductive material can be increased. On the other hand, when the average diameter of the CNTs is not more than any of the upper limits set forth above, the CNTs form good electrical conduction paths in an electrode mixed material layer, even further enhance output characteristics of a secondary battery, and can also even further improve cycle characteristics of the secondary battery.

A ratio (G/D ratio) of G band peak intensity relative to D band peak intensity in a Raman spectrum of the CNTs is preferably 0.6 or more, more preferably 1.2 or more, even more preferably 2.1 or more, further preferably 3.0 or more, and even further preferably 3.6 or more. When the G/D ratio of the CNTs is not less than any of the lower limits set forth above, cycle characteristics of a secondary battery can be further improved. Note that the upper limit for the G/D ratio of the CNTs is not specifically limited, but may be 200 or less, for example.

The BET specific surface area of the CNTs is preferably 100 m²/g or more, more preferably 200 m²/g or more, and even more preferably 250 m²/g or more, and is preferably 1,200 m²/g or less, more preferably 1,100 m²/g or less, and even more preferably 1,000 m²/g or less. When the BET specific surface area of the CNTs is within any of the specific ranges set forth above, output characteristics of a secondary battery can be even further enhanced.

Note that the "BET specific surface area" of CNTs referred to in the present disclosure is the nitrogen adsorption specific surface area measured by the BET method.

### [Production method of carbon nanotubes]

CNTs having the properties set forth above can be produced by a known technique such as arc discharge, laser ablation, or the super growth method without any specific limitations.

### [Proportional content in slurry composition]

Although the proportional content of the CNTs in the slurry composition can be adjusted as appropriate within a range that yields the desired effects according to the present disclosure, it is preferable that the proportional content of the CNTs is set as not less than 0.01 mass% and not more than 0.5 mass% when all solid content contained in the slurry composition is taken to be 100 mass%, for example. When the proportional content of the CNTs in the slurry composition is not less than the lower limit set forth above, internal resistance of a secondary battery can be effectively reduced, and output characteristics of the secondary battery can be even further enhanced. On the other hand, when the proportional content of the CNTs in the slurry composition is not more than the upper limit set forth above, flexibility of an electrode mixed material layer can be increased.

### <<Particulate conductive material>>

The particulate conductive material is a component that can function as a conductive material in an electrode mixed material layer and that can improve flexibility of the electrode mixed material layer.

The particulate conductive material may be carbon black (for example, acetylene black, Ketjenblack^{®} (Ketjenblack is a registered trademark in Japan, other countries, or both), or furnace black), graphene, or the like without any specific limitations so long as it is a conductive material having a form other than a fibrous form (for example, a spherical or plate-like form). Note that one of these particulate conductive materials may be used individually, or two or more of these particulate conductive materials may be used in combination in a freely selected ratio.

### [Proportional content in slurry composition]

Although the proportional content of the particulate conductive material in the slurry composition can be adjusted as appropriate within a range that yields the desired effects according to the present disclosure, it is preferable that the proportional content of the particulate conductive material is set as not less than 0.1 mass% and not more than 5 mass% when all solid content contained in the slurry composition is taken to be 100 mass%, for example. When the proportional content of the particulate conductive material in the slurry composition is not less than the lower limit set forth above, flexibility of an electrode mixed material layer can be further improved. On the other hand, when the proportional content of the particulate conductive material in the slurry composition is not more than the upper limit set forth above, adhesiveness of an electrode mixed material layer can be increased.

### <<Mixing ratio of CNTs and particulate conductive material>>

Although no specific limitations are placed on the mixing ratio of the CNTs and the particulate conductive material, the proportion constituted by the content of the CNTs among the total content of the CNTs and the particulate conductive material in the slurry composition, for example, is preferably 1 mass% or more, more preferably 2 mass% or more, and even more preferably 3 mass% or more, and is preferably 30 mass% or less, more preferably 20 mass% or less, and even more preferably 10 mass% or less. When the proportion constituted by the content of the CNTs among the total content of the CNTs and the particulate conductive material is not less than any of the lower limits set forth above, internal resistance of a secondary battery can be effectively reduced, and output characteristics of the secondary battery can be even further enhanced. On the other hand, when the proportion constituted by the content of the CNTs among the total content of the CNTs and the particulate conductive material is not more than any of the upper limits set forth above, flexibility of an electrode mixed material layer can be improved.

### <Dispersion medium>

The presently disclosed slurry composition normally contains a dispersion medium such as water. Note that a solvent such as water that has been used in production of the water-soluble polymer can be used as at least a portion of the solvent that is contained in the slurry composition.

### <Other components>

Examples of other components that can optionally be contained in the presently disclosed slurry composition include reinforcing materials, leveling agents, viscosity modifiers, and additives for electrolyte solution. Known components can be used as these other components without any specific limitations so long as they do not affect battery reactions. One of these components may be used individually, or two or more of these components may be used in combination in a freely selected ratio.

Moreover, the presently disclosed slurry composition may further contain a dispersant as another component. Carboxymethyl cellulose or a salt thereof; an aromatic sulfonic acid-formalin condensate such as a β-naphthalenesulfonic acid-formalin condensate or a salt thereof; or the like can be used as the dispersant. In particular, it is preferable to use an aromatic sulfonic acid-formalin condensate or salt thereof from a viewpoint of further improving adhesiveness of an electrode mixed material layer, and more preferable to use a sodium salt of a β-naphthalenesulfonic acid-formalin condensate.

In a case in which an aromatic sulfonic acid-formalin condensate or salt thereof is used as a dispersant, the proportional content of the aromatic sulfonic acid-formalin condensate or salt thereof in the slurry composition can be set as not less than 0.01 mass% and not more than 0.5 mass% when all solid content contained in the slurry composition is taken to be 100 mass%, for example.

### <Production method of slurry composition>

The presently disclosed slurry composition can be produced by dispersing or dissolving the above-described components in the dispersion medium, for example, but is not specifically limited to being produced in this manner. Specifically, the slurry composition can be produced by mixing the above-described components and the dispersion medium using a mixer such as a ball mill, a sand mill, a bead mill, a pigment disperser, a grinding machine, an ultrasonic disperser, a homogenizer, a planetary mixer, or a FILMIX.

Although water is typically used as the dispersion medium, an aqueous solution of a freely selected compound or a mixed solution of water and a small amount of an organic medium may alternatively be used.

Moreover, in a situation in which a conductive material such as the previously described CNTs and particulate conductive material, for example, is used in production of the presently disclosed slurry composition, the conductive material such as the CNTs and the particulate conductive material can be dispersed in a dispersion medium such as water in advance so as to produce a dispersion liquid, and then the obtained dispersion liquid can be mixed with the electrode active material, the water-soluble polymer, and other components such as the particulate polymer.

### <<pH of slurry composition>>

The presently disclosed slurry composition preferably has a pH of not lower than 7.0 and not higher than 10.0 from a viewpoint of good coverage of the olivine-type lithium phosphate compound by the water-soluble polymer. Under pH conditions such as set forth above, the water-soluble polymer in the slurry composition can spread out to a suitable degree. As a result, effects of increasing close adherence of an obtained electrode mixed material layer to a current collector, enhancing output characteristics and cycle characteristics of an obtained secondary battery, and so forth such as described above can be even better displayed.

### (Electrode for non-aqueous secondary battery)

The presently disclosed electrode includes an electrode mixed material layer formed using the presently disclosed slurry composition set forth above and normally has a structure in which the electrode mixed material layer is formed on a current collector. Consequently, the electrode mixed material layer contains at least the olivine-type lithium phosphate compound and the water-soluble polymer, and optionally further contains the particulate polymer, the conductive material, and so forth.

Components such as the olivine-type lithium phosphate compound, the water-soluble polymer, the particulate polymer, and the conductive material that are contained in the electrode mixed material layer are components that were contained in the slurry composition set forth above, and the preferred proportional content of each of these components is the same as the preferred proportional content of each of these components when all solid content contained in the slurry composition is taken to be 100 mass%.

Moreover, the preferred proportion constituted by the content of the CNTs among the total content of the CNTs and the particulate conductive material that can be contained in the electrode mixed material layer is also the same as the preferred proportion constituted by the content of the CNTs among the total content of the CNTs and the particulate conductive material that can be contained in the slurry composition set forth above.

The presently disclosed electrode may further include a conductive adhesive layer containing at least a conductive material and an adhesive between the current collector and the electrode mixed material layer.

The electrode mixed material layer that is included in the presently disclosed electrode can display excellent close adherence as a result of being formed using the presently disclosed slurry composition.

Moreover, the electrode mixed material layer that is included in the presently disclosed electrode can cause a non-aqueous secondary battery to display high output characteristics and cycle characteristics.

### <Current collector>

A material having electrical conductivity and electrochemical durability is used as the current collector. Specifically, the current collector may, for example, be made of a metal material such as iron, copper, aluminum, nickel, stainless steel, titanium, tantalum, gold, or platinum. Note that one of these materials may be used individually, or two or more of these materials may be used in combination in a freely selected ratio.

In a case in which an electrode that further includes the aforementioned conductive adhesive layer between the electrode mixed material layer and the current collector is to be produced, for example, a conductive adhesive layer-equipped current collector having a conductive adhesive layer formed on a current collector substrate can be used as the current collector.

The current collector substrate may be a current collector formed of a metal material such as previously described, for example.

No specific limitations are placed on the method by which the conductive adhesive layer is formed on the current collector substrate. For example, the conductive adhesive layer can be formed through application and subsequent drying on the current collector substrate of a slurry composition (also referred to as a "conductive adhesive") that contains at least a conductive material and an adhesive dispersed or dissolved in a dispersion medium or solvent such as water and that optionally further contains a dispersant dispersed or dissolved in the dispersion medium or solvent.

The conductive material is not specifically limited, and any of the previously described conductive materials that can be contained in the slurry composition can be used, for example. The adhesive is also not specifically limited, and the previously described particulate polymer that can be contained in the slurry composition can be used. The dispersant is also not specifically limited, and a known dispersant such as carboxymethyl cellulose or a salt thereof, for example, can be used.

Moreover, known methods can be adopted without any specific limitations as the method by which the conductive adhesive is applied onto the current collector substrate and the method by which the applied conductive adhesive is dried.

### <Electrode mixed material layer>

The electrode mixed material layer is formed, for example, through a step of applying the slurry composition onto the current collector (application step) and a step of drying the slurry composition that has been applied onto the current collector (drying step).

### <<Application step>>

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of a slurry composition film on the current collector after application but before drying can be set as appropriate in accordance with the thickness of the electrode mixed material layer to be obtained after drying.

### <<Drying step>>

The slurry composition that has been applied onto the current collector can be dried by any commonly known method without any specific limitations. Examples of drying methods that can be used include drying by warm, hot, or low-humidity air; drying in a vacuum; and drying by irradiation with infrared light, an electron beam, or the like. By drying the slurry composition that has been applied onto the current collector in this manner, an electrode mixed material layer can be formed on the current collector, and an electrode including the current collector and the electrode mixed material layer can be obtained.

After the drying step, the electrode mixed material layer may be further subjected to a pressing process, such as mold pressing or roll pressing. This pressing process can improve peel strength of the electrode.

### (Non-aqueous secondary battery)

The presently disclosed secondary battery includes the presently disclosed electrode set forth above. For example, the presently disclosed secondary battery may include a positive electrode, a negative electrode, a separator, and an electrolyte solution, wherein at least one of the positive electrode and the negative electrode is the presently disclosed electrode set forth above. In particular, it is preferable that at least the positive electrode in the presently disclosed secondary battery is the presently disclosed electrode. The presently disclosed secondary battery has excellent output characteristics and cycle characteristics as a result of including the presently disclosed electrode set forth above. Although the following describes, as one example, a case in which the non-aqueous secondary battery is a lithium ion secondary battery, the presently disclosed non-aqueous secondary battery is not limited to the following example.

### <Positive electrode>

The positive electrode is not specifically limited and can be the presently disclosed electrode set forth above. In other words, the positive electrode can be a positive electrode that includes a current collector and a positive electrode mixed material layer formed from the presently disclosed slurry composition, for example.

### <Negative electrode>

The negative electrode is not specifically limited and can be a known negative electrode.

### <Separator>

The separator is not specifically limited and may be a microporous membrane in which a polyolefinic (polyethylene, polypropylene, polybutene, or polyvinyl chloride) resin is used, a microporous membrane in which a resin such as polyethylene terephthalate, polycycloolefin, polyether sulfone, polyamide, polyimide, polyimide amide, polyaramid, polycycloolefin, nylon, or polytetrafluoroethylene is used, a woven or non-woven fabric in which polyolefinic fiber is used, an assembly of particles formed of an insulating substance, or the like, for example. Of these examples, a microporous membrane in which a polyolefinic (polyethylene, polypropylene, polybutene, or polyvinyl chloride) resin is used is preferable in terms that the total thickness of the separator can be reduced, which can thereby increase the ratio of an electrode mixed material layer in the secondary battery and increase the volumetric capacity.

### <Electrolyte solution>

An electrolyte solution that is obtained by dissolving an electrolyte in a solvent can be used as the electrolyte solution.

The solvent may be an organic solvent in which the electrolyte can dissolve. Specifically, examples of solvents that may suitably be used include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Moreover, a known additive such as vinylene carbonate (VC), fluoroethylene carbonate (FEC), or ethyl methyl sulfone, for example, may be added to the solvent.

The electrolyte may be a lithium salt. Examples of lithium salts that can be used include compounds described in JP2012-204303A. Of these lithium salts, LiPF₆, LiClO₄, and CF₃SO₃Li are preferred as electrolytes because they readily dissolve in organic solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The presently disclosed secondary battery can be produced by a known assembly method without any specific limitations. Specifically, the presently disclosed secondary battery can be produced by, for example, performing rolling, folding, or the like of the negative electrode, positive electrode, and separator obtained as described above in accordance with the battery shape, as necessary, to place these battery members inside of a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like, for example.

Note that battery members such as the positive electrode, the negative electrode, and the separator that are included in the secondary battery are typically arranged such that the positive electrode is in contact with one side of the separator and the negative electrode is in contact with the other side of the separator. More specifically, the positive electrode mixed material layer is arranged at one side of the separator and the negative electrode mixed material layer is arranged at the other side of the separator such as to be in contact with the separator.

### EXAMPLES

The following provides a specific description of the present disclosure based on examples. However, the present disclosure is not limited to these examples. In the following description, "%" and "parts" used in expressing quantities are by mass, unless otherwise specified.

Note that in the case of a polymer that is obtained through polymerization of a plurality of types of monomers, the proportional content in the polymer of a monomer unit that is formed through polymerization of a given monomer is normally, unless otherwise specified, the same as the ratio (charging ratio) of the given monomer among all monomers used in polymerization of the polymer.

Various measurements and evaluations were performed according to the following methods.

### <Volume-average particle diameter D50 of olivine-type lithium phosphate compound>

A particle size distribution (by volume) of an olivine-type lithium phosphate compound was obtained through a dry cumulative particle diameter distribution measured by a laser diffraction/scattering particle size analyzer (MT3200II produced by MicrotracBEL Corp.) with a dispersing air pressure of 0.05 MPa during measurement. The particle diameter at which cumulative volume calculated from a small diameter end of the obtained particle size distribution reached 50% was taken to be the volume-average particle diameter D50 of the olivine-type lithium phosphate compound.

### <Average hydrodynamic radius of water-soluble polymer>

### <<Sample preparation>>

A water-soluble polymer produced in each example or comparative example was diluted to a solid content concentration of 0.1 mass% using a diluting solvent (0.1 mol/L phosphate buffer solution having a pH of 8.0), was then filtered using a filter having a pore diameter of 0.45 µm, and the resultant filtrate was taken to be a measurement sample.

### <<Measurement conditions>>

Apparatus: DynaPro NanoStar (produced by Wyatt Technology)
Light source: Semiconductor laser (658 nm, 100 mW)
Laser power: 100%
Integration conditions: 3 sec × 10 times
Measurement temperature: 25°C
Measurement n-number: 2 (measurement sample changed and measurement performed twice)
Solvent: Water

An average value of the two measurements was taken to be the average hydrodynamic radius of the water-soluble polymer.

### <Weight-average molecular weight of water-soluble polymer>

The weight-average molecular weight (Mw) of a water-soluble polymer produced in each example or comparative example was measured by gel permeation chromatography (GPC).

Note that preparation of an eluent (0.1 M Tris buffer solution (pH 9, 0.1 M KCl)) was performed as follows.
1) 0.8 L of ultrapure water was prepared, and 12.11 g of tris(hydroxymethyl)aminomethane and 7.46 g of potassium chloride were dissolved therein.
2) 0.1 M hydrochloric acid was added dropwise to adjust the pH to 9.
3) The volume of liquid was made up to 1 L with ultrapure water in a volumetric flask after pH adjustment.

Sample preparation was performed as follows.

First, the water-soluble polymer was added to 5 mL of the eluent such as to give a solid content concentration of 0.05 mass%, and then, at 25°C, a stirring bar was placed therein and 30 minutes of stirring was performed at 300 rpm using a magnetic stirrer. A filtrate obtained through filtration of the resultant solution using a 0.45 µm membrane filter was taken as a measurement sample.

The GPC measurement conditions were as follows.
Apparatus: Agilent 1260 Infinity II HPLC (Agilent Technologies, Inc.)
Column: TSKgel GMPWXL 13 µm 300 mm × 7.8 mm
Eluent: 0.1 M Tris buffer solution (pH 9, 0.1 M KCl)
Flow rate: 0.7 mL/min
Detector: 1260 Infinity II RI detector (Agilent Technologies, Inc.)
Column temperature: 40°C
Injection volume: 200 µL
Molecular weight standard: Standard polyethylene oxide (PEO)
Sample concentration: 0.05 mass% (solid content concentration)

### <Volume-average particle diameter D50 of particulate polymer>

For each particulate polymer produced in the examples and comparative examples, a particle size distribution (by volume) was measured with respect to a water dispersion adjusted to a solid content concentration of 0.1 mass% using a laser diffraction particle size analyzer (produced by Beckman Coulter, Inc.; product name: LS-230), and the volume-average particle diameter D50 of the particulate polymer was determined as the particle diameter (µm) at which cumulative volume calculated from a small diameter end of the distribution reached 50%.

### <Close adherence of electrode mixed material layer to current collector>

A positive electrode produced in each example or comparative example was cut out as a rectangular shape of 1.0 cm in width by 10 cm in length to obtain a test specimen. Cellophane tape (tape prescribed by JIS Z1522) was affixed to the surface at the positive electrode mixed material layer-side of the test specimen, and then the stress when the cellophane tape was pulled and peeled off in a direction at 90° and at a speed of 50 mm/min from one end of the test specimen was measured. A total of three measurements were made in this manner. An average value of the measurements was determined, was taken to be the peel strength (N/m), and was evaluated by the following standard. A larger peel strength indicates that the positive electrode mixed material layer has better adhesiveness and that the positive electrode mixed material layer is closely adhered more strongly to the current collector.
A: Peel strength of 10 N/m or more.
B: Peel strength of not less than 8.5 N/m and less than 10 N/m
C: Peel strength of not less than 7 N/m and less than 8.5 N/m
D: Peel strength of less than 7 N/m

### <Output characteristics>

A lithium ion secondary battery produced in each example or comparative example was left at rest at a temperature of 25°C for 5 hours after injection of electrolyte solution. Next, the lithium ion secondary battery was charged to an SOC (State Of Charge) of 20% by a 0.1C constant-current method at a temperature of 25°C and was then subjected to 12 hours of aging at a temperature of 60°C. The lithium ion secondary battery was then discharged to a cell voltage of 2.6 V by a 0.2C constant-current method at a temperature of 25°C. Thereafter, CC-CV charging (upper limit cell voltage: 3.6 V) was performed with a 0.2C constant current, and then CC discharging was performed to a cell voltage of 2.6 V with a 0.2C constant current. This charging and discharging at 0.2C was repeated three times. The discharge capacity in the 3^{rd} cycle at 0.2C was taken to be the initial capacity CX. Thereafter, CC-CV charging (upper limit cell voltage: 3.6 V) was performed with a 0.2C constant current, CC discharging was performed to a cell voltage of 2.6 V with a 2.0C constant current, and the discharge capacity at this time was taken to be CY. A 2.0C/0.2C discharge capacity maintenance rate expressed by (CY/CX) × 100(%) was determined and was evaluated by the following standard. A larger discharge capacity maintenance rate indicates that the lithium ion secondary battery has better output characteristics.
A: 2.0C/0.2C discharge capacity maintenance rate of 60% or more
B: 2.0C/0.2C discharge capacity maintenance rate of not less than 55% and less than 60%
C: 2.0C/0.2C discharge capacity maintenance rate of not less than 50% and less than 55%
D: 2.0C/0.2C discharge capacity maintenance rate of less than 50%

### <Cycle characteristics>

A lithium ion secondary battery produced in each example or comparative example was left at rest at a temperature of 25°C for 5 hours after injection of electrolyte solution. Next, the lithium ion secondary battery was charged to an SOC (State Of Charge) of 20% by a 0.1C constant-current method at a temperature of 25°C and was then subjected to 12 hours of aging at a temperature of 60°C. The lithium ion secondary battery was then discharged to a cell voltage of 2.6 V by a 0.2C constant-current method at a temperature of 25°C. Thereafter, CC-CV charging (upper limit cell voltage: 3.6 V) was performed with a 0.2C constant current, and then CC discharging was performed to a cell voltage of 2.6 V with a 0.2C constant current. This charging and discharging at 0.2C was repeated three times.

Thereafter, a charge/discharge operation between cell voltages of 3.60 V and 2.60 V by CC-CV charging (upper limit cell voltage: 3.6 V) with a 0.2C constant current and by a discharge rate of 1.0C was performed for 100 cycles in an environment having a temperature of 45°C. The discharge capacity of the 1^{st} cycle was defined as X1, and the discharge capacity of the 100^{th} cycle was defined as X2. A capacity maintenance rate expressed by ΔC = (X2/X1) × 100(%) was determined using the discharge capacity X1 and the discharge capacity X2 and was evaluated by the following standard. A larger value for the capacity maintenance rate ΔC indicates that the lithium ion secondary battery has better cycle characteristics.
A: Capacity maintenance rate of 90% or more
B: Capacity maintenance rate of not less than 85% and less than 90%
C: Capacity maintenance rate of not less than 80% and less than 85%
D: Capacity maintenance rate of less than 80%

### <Synthesis of water-soluble polymer>

### (Example 1)

A 10 L septum-equipped flask was charged with 770 parts of deionized water. Heating was performed to a temperature of 40°C, and the inside of the flask was purged with nitrogen gas at a flow rate of 100 mL/min. Next, 5.5 parts of acrylic acid as an acidic group-containing monomer, 8.0 parts of 2-methoxyethyl acrylate as a monomer represented by formula (I) (non-hydroxy group-containing (meth)acrylic acid ester monomer), 5.0 parts of methyl acrylate as a non-hydroxy group-containing (meth)acrylic acid alkyl ester monomer, and 81.5 parts of 2-hydroxyethyl acrylate as a hydroxy group-containing (meth)acrylic acid ester monomer were mixed and were injected into the flask using a syringe. Thereafter, 3 parts of a 10.0% aqueous solution of sodium L-ascorbate as a polymerization accelerator was charged to the flask using a syringe, and, 10 minutes later, 38 parts of a 4.0% aqueous solution of potassium persulfate as a polymerization initiator was added into the flask using a syringe. At 1 hour after the start of the reaction, the temperature was raised to 55°C, and the polymerization reaction was caused to proceed. After 2 hours, 0.5 parts of a 10.0% aqueous solution of sodium hydrogen sulfite as a polymerization accelerator was charged to the flask using a syringe, and, 10 minutes later, 5 parts of a 4.0% aqueous solution of potassium persulfate as a polymerization initiator was added into the flask using a syringe. After 3 hours, 0.5 parts of a 10.0% aqueous solution of sodium hydrogen sulfite as a polymerization accelerator was charged to the flask using a syringe, and, 10 minutes later, 5 parts of a 4.0% aqueous solution of potassium persulfate as a polymerization initiator was added into the flask using a syringe. After 4 hours, 0.5 parts of a 10.0% aqueous solution of sodium hydrogen sulfite as a polymerization accelerator was charged to the flask using a syringe, and, 10 minutes later, 5 parts of a 4.0% aqueous solution of potassium persulfate as a polymerization initiator was added into the flask using a syringe. After 5 hours, 0.5 parts of a 10.0% aqueous solution of sodium hydrogen sulfite as a polymerization accelerator was charged to the flask using a syringe, and, 10 minutes later, 5 parts of a 4.0% aqueous solution of potassium persulfate as a polymerization initiator was added into the flask using a syringe. After 6 hours, a reaction inhibitor was added, and the flask was opened to air to stop the polymerization reaction. The product was subsequently adjusted to pH 8 using an 8% aqueous solution of sodium hydroxide to yield a water-soluble polymer. The average hydrodynamic radius and weight-average molecular weight of the obtained water-soluble polymer were measured as previously described. The results are shown in Table 1.

Note that the chemical composition of the obtained water-soluble polymer was the same as the ratio (charging ratio) of each monomer among all monomers used in polymerization of the water-soluble polymer. Moreover, the obtained water-soluble polymer was water-soluble according to the definition in the present specification.

### <Production of particulate polymer>

A particulate polymer (hydrophilic group-containing acrylic polymer) serving as a binder was produced according to the following procedure.

A 1 L septum-equipped flask (reactor) including a stirrer was charged with 90 parts of deionized water and 0.5 parts of sodium lauryl sulfate as an emulsifier. The gas phase was purged with nitrogen gas, the temperature was raised to 60°C, and then 0.3 parts of ammonium persulfate (APS) as a polymerization initiator was dissolved in 20.0 parts of deionized water and was added into the flask.

Meanwhile, a monomer composition was obtained in a separate vessel (emulsion vessel) by mixing 30 parts of deionized water, 0.5 parts of sodium lauryl sulfate as an emulsifier, 76.5 parts of butyl acrylate, 2.5 parts of itaconic acid, 1.0 parts of 2-hydroxyethyl acrylate, and 20 parts of styrene. The monomer composition was continuously added into the 1 L septum-equipped flask over 3 hours to perform polymerization. The reaction was carried out at 60°C during the addition. Once the addition was complete, a further 2 hours of stirring was performed at 80°C to yield a water dispersion of a particulate polymer.

The water dispersion of the particulate polymer obtained in this manner was adjusted to pH 8 through addition of 5% sodium hydroxide aqueous solution to yield a water dispersion of the particulate polymer. Note that the obtained particulate polymer was water-insoluble according to the definition in the present specification. The volume-average particle diameter of the particulate polymer was measured as previously described. The result is shown in Table 1.

### <Production of CNT dispersion liquid>

A CNT dispersion liquid having a solid content concentration of 1 mass% was produced by using a disper blade to stir (3,000 rpm, 10 minutes) 0.4 parts of carbon nanotubes (BET specific surface area: 250 m²/g) as a conductive material, 0.6 parts (in terms of solid content) of carboxymethyl cellulose (DAICEL 1220 produced by Daicel Corporation), and 99 parts of deionized water, and subsequently using a bead mill in which zirconia beads of 1 mm in diameter were used to perform 1 hour of mixing at a circumferential speed of 8 m/s.

### <Production of acetylene black dispersion liquid>

An acetylene black dispersion liquid having a solid content concentration of 5 mass% was produced by using a disper blade to stir (3,000 rpm, 60 minutes) 4.4 parts of acetylene black as a conductive material, 0.6 parts (in terms of solid content) of carboxymethyl cellulose (DAICEL 1220 produced by Daicel Corporation), and 95 parts of deionized water.

### <Production of slurry composition for positive electrode>

After adding together 96.65 parts of olivine-type lithium iron phosphate (LiFePO₄) (average particle diameter: 1.0 µm) as a positive electrode active material, 0.85 parts (in terms of solid content) of the aqueous solution of the water-soluble polymer obtained as described above, and deionized water, these materials were adjusted to a solid content concentration of 78% and were mixed (60 rpm, 50 minutes) in a planetary mixer.

Next, the acetylene black dispersion liquid was added such that the additive amount of acetylene black was 1.9 parts and was mixed (60 rpm, 10 minutes) in the planetary mixer. Next, the CNT dispersion liquid was added such that the additive amount of carbon nanotubes was 0.1 parts and was mixed (60 rpm, 10 minutes) in the planetary mixer. Finally, 1.0 parts (in terms of solid content) of the water dispersion of the particulate polymer was added and was mixed (40 rpm, 10 minutes) in the planetary mixer to produce a slurry composition for a positive electrode as a slurry composition for a non-aqueous secondary battery electrode. Note that in production of the slurry composition for a positive electrode, the viscosity of the obtained slurry composition for a positive electrode (measured by single-cylinder rotational viscometer (Brookfield B-type viscometer) in accordance with JIS Z8803:1991; temperature: 25°C; rotation speed: 60 rpm) was adjusted to within a range of 1,000 mPa·s to 2,000 mPa·s through addition of water. The pH of the slurry composition for a positive electrode was 8.6.

### <Production of conductive adhesive layer-equipped current collector>

A conductive adhesive layer-equipped current collector produced by a method described below was used as a current collector used in production of a positive electrode.

A conductive adhesive was produced by adding together 70 parts of conductive carbon (graphite/acetylene black = 70/30 (mass ratio)) and 8 parts of carboxymethyl cellulose (DAICEL 1220 produced by Daicel Corporation) as a dispersant, stirring these materials at 3,000 rpm for 60 minutes using a disper blade, subsequently adding 22 parts in terms of solid content of the water dispersion of the particulate polymer, and performing a further 10 minutes of stirring at 1,500 rpm using the disper blade.

The conductive adhesive was applied onto aluminum foil serving as a current collector substrate by casting using a roll bar with a forming rate of 20 m/min and was then dried at 80°C to form a conductive adhesive layer of 1 µm in thickness. In this manner, a conductive adhesive layer-equipped current collector having a conductive adhesive layer formed on the current collector substrate was obtained.

### <Production of positive electrode for lithium ion secondary battery>

The slurry composition for a positive electrode obtained as described above was applied onto the surface at the conductive adhesive layer-side of the conductive adhesive layer-equipped current collector by a comma coater such as to have a mass per unit area after drying of 22 mg/cm², was dried at 90°C for 20 minutes and at 120°C for 20 minutes, and was subsequently heat treated at 60°C for 10 hours to obtain a positive electrode web. The positive electrode web was rolled by roll pressing to produce a sheet-shaped positive electrode including a positive electrode mixed material layer of 2.5 g/cm³ in density, a conductive adhesive layer, and aluminum foil. The sheet-shaped positive electrode was cut to 48.0 mm in width and 47 cm in length to obtain a positive electrode for a lithium ion secondary battery.

The obtained positive electrode for a lithium ion secondary battery was used to evaluate close adherence of the positive electrode mixed material layer to the current collector. The result is shown in Table 1.

### <Production of negative electrode for lithium ion secondary battery>

A 5 MPa pressure-resistant vessel equipped with a stirrer was charged with 65 parts of styrene as an aromatic vinyl monomer, 35 parts of 1,3-butadiene as an aliphatic conjugated diene monomer, 2 parts of itaconic acid as an ethylenically unsaturated carboxylic acid monomer, 1 part of 2-hydroxyethyl acrylate as a hydroxy group-containing monomer, 0.3 parts of t-dodecyl mercaptan as a molecular weight modifier, 5 parts of sodium dodecylbenzenesulfonate as an emulsifier, 150 parts of deionized water as a solvent, and 1 part of potassium persulfate as a polymerization initiator. These materials were thoroughly stirred and were then heated to 55°C to initiate polymerization.

Cooling was performed to quench the reaction at the point at which monomer consumption reached 95.0%. A water dispersion containing a polymer that was obtained in this manner was adjusted to pH 8 through addition of 5% sodium hydroxide aqueous solution. Unreacted monomer was subsequently removed through thermal-vacuum distillation. Thereafter, cooling was performed to 30°C or lower to yield a water dispersion of a particulate polymer as a binder for a negative electrode.

A planetary mixer was charged with 48.75 parts of artificial graphite and 48.75 parts of natural graphite as negative electrode active materials and 1 part (in terms of solid content) of carboxymethyl cellulose as a thickener. These materials were diluted to a solid content concentration of 60% with deionized water and were subsequently kneaded at a rotation speed of 45 rpm for 60 minutes. Thereafter, 1.5 parts in terms of solid content of the water dispersion of the particulate polymer as a binder for a negative electrode that was obtained as described above was added and was kneaded therewith at a rotation speed of 40 rpm for 40 minutes. The viscosity was adjusted to 3,000 ± 500 mPa·s (measured by B-type viscometer at 25°C and 60 rpm) through addition of deionized water to produce a slurry composition for a negative electrode.

The slurry composition for a negative electrode was applied onto the surface of copper foil of 15 µm in thickness serving as a current collector by a comma coater such as to have a coating weight of 10 ± 0.5 mg/cm². Thereafter, the copper foil with the slurry composition for a negative electrode applied thereon was conveyed inside an oven having a temperature of 80°C for 2 minutes and an oven having a temperature of 110°C for 2 minutes at a speed of 400 mm/min so as to dry the slurry composition for a negative electrode on the copper foil and obtain a negative electrode web having a negative electrode mixed material layer formed on the current collector.

This negative electrode web was rolled by roll pressing to produce a sheet-shaped negative electrode including a negative electrode mixed material layer of 1.6 g/cm³ in density and copper foil. The sheet-shaped negative electrode was cut to 50.0 mm in width and 52 cm in length to obtain a negative electrode for a lithium ion secondary battery.

### <Production of lithium ion secondary battery>

The produced positive electrode for a lithium ion secondary battery and negative electrode for a lithium ion secondary battery were wound up using a core of 20 mm in diameter with the respective electrode mixed material layers thereof facing each other and with a separator of 15 µm in thickness (microporous membrane made of polyethylene) interposed therebetween to obtain a roll. The obtained roll was compressed to a thickness of 4.5 mm from one direction at a rate of 10 mm/s. Note that the compressed roll had an elliptical shape in plan view, and the ratio of the major axis to the minor axis (major axis/minor axis) was 7.7.

In addition, a LiPF₆ solution of 1.0 M in concentration (solvent: mixed solvent of ethylene carbonate (EC)/ethyl methyl carbonate (EMC) = 3/7 (volume ratio); additive: containing 2 volume% (solvent ratio) of vinylene carbonate) was prepared as an electrolyte solution.

Thereafter, the compressed roll was housed inside of a laminate case made of aluminum together with 3.2 g of the electrolyte solution. After connecting a nickel lead at a specific position on the negative electrode for a secondary battery and connecting an aluminum lead at a specific position on the positive electrode for a lithium ion secondary battery, an opening of the case was thermally sealed to obtain a lithium ion secondary battery. This lithium ion secondary battery had a pouch shape of 35 mm in width, 60 mm in height, and 5 mm in thickness. The nominal capacity of the battery was 700 mAh.

The output characteristics and cycle characteristics of the obtained lithium ion secondary battery were evaluated as previously described. The results are shown in Table 1.

### (Example 2)

Various operations, measurements, and evaluations were performed in the same way as in Example 1 with the exception that production of a particulate polymer was performed as described below. The results are shown in Table 1.

### <Production of particulate polymer>

A particulate polymer (hydrophilic group-containing SBR) was produced as follows.

A 5 MPa pressure-resistant vessel equipped with a stirrer was charged with 62 parts of styrene as an aromatic vinyl monomer, 34 parts of 1,3-butadiene as an aliphatic conjugated diene monomer, 3 parts of itaconic acid as an ethylenically unsaturated carboxylic acid monomer, 1 part of 2-hydroxyethyl acrylate as a hydroxy group-containing monomer, 0.3 parts of t-dodecyl mercaptan as a molecular weight modifier, 5 parts of sodium dodecylbenzenesulfonate as an emulsifier, 150 parts of deionized water as a solvent, and 1 part of potassium persulfate as a polymerization initiator. These materials were thoroughly stirred and were then heated to 55°C to initiate polymerization.

Cooling was performed to quench the reaction at the point at which monomer consumption reached 95.0%. A water dispersion containing a polymer that was obtained in this manner was adjusted to pH 8 through addition of 5% sodium hydroxide aqueous solution. Unreacted monomer was subsequently removed by thermal-vacuum distillation. Thereafter, cooling was performed to 30°C or lower to yield a water dispersion of a particulate polymer. Note that the obtained particulate polymer was water-insoluble according to the definition in the present specification. The volume-average particle diameter of the particulate polymer was measured as previously described. The result is shown in Table 1.

### (Examples 3 and 4)

Various operations, measurements, and evaluations were performed in the same way as in Example 1 with the exception that a material having an average particle diameter shown in Table 1 was used as olivine-type lithium iron phosphate (LiFePO₄) serving as a positive electrode active material. The results are shown in Table 1.

### (Examples 5 and 6)

In production of the water-soluble polymer, the amounts of added monomers and the polymerization conditions, as necessary, were changed such that the chemical composition, average hydrodynamic radius, and weight-average molecular weight of the obtained water-soluble polymer were as shown in Table 1. Particularly in Example 6, the additive amount of potassium persulfate (4.0% aqueous solution) as a polymerization initiator was set as 45 parts in a first addition among the plurality of additions. With the exception of these conditions, various operations, measurements, and evaluations were performed in the same way as in Example 1. The results are shown in Table 1.

### (Example 7)

In production of the water-soluble polymer, the chemical composition (proportional content of each monomer unit) of the obtained water-soluble polymer was set as shown in Table 1. Specifically, only 2-methoxyethyl acrylate as a monomer represented by formula (I) was compounded as a non-hydroxy group-containing (meth)acrylic acid ester monomer without compounding a non-hydroxy group-containing (meth)acrylic acid alkyl ester monomer, and the amount of 2-methoxyethyl acrylate was increased. With the exception of this point, various operations, measurements, and evaluations were performed in the same way as in Example 1. The results are shown in Table 1.

### (Comparative Examples 1 and 2)

A material having an average particle diameter shown in Table 1 was used as olivine-type lithium iron phosphate (LiFePO₄) serving as a positive electrode active material. With the exception of this point, various operations, measurements, and evaluations were performed in the same way as in Example 1. The results are shown in Table 1.

### (Comparative Example 3)

In production of the water-soluble polymer, the amounts of added monomers and the polymerization conditions were changed such that the chemical composition, average hydrodynamic radius, and weight-average molecular weight of the obtained water-soluble polymer were as shown in Table 1. In the polymerization conditions, the additive amount of potassium persulfate (4.0% aqueous solution) as a polymerization initiator was set as 32 parts in a first addition among the plurality of additions. With the exception of these conditions, various operations, measurements, and evaluations were performed in the same way as in Example 1. The results are shown in Table 1.

### (Comparative Example 4)

A material having an average particle diameter shown in Table 1 was used as olivine-type lithium iron phosphate (LiFePO₄) serving as a positive electrode active material. In production of the water-soluble polymer, the amounts of added monomers and the polymerization conditions were changed such that the chemical composition, average hydrodynamic radius, and weight-average molecular weight of the obtained water-soluble polymer were as shown in Table 1. In the polymerization conditions, the additive amount of potassium persulfate (4.0% aqueous solution) as a polymerization initiator was set as 48 parts in a first addition among the plurality of additions. With the exception of these conditions, various operations, measurements, and evaluations were performed in the same way as in Example 1. The results are shown in Table 1.

In Table 1, shown below:
"LFP" indicates olivine-type lithium iron phosphate;
"AA" indicates acrylic acid unit;
"MA" indicates methyl acrylate unit;
"AA2ME" indicates 2-methoxyethyl acrylate unit;
"β-HEA" indicates 2-hydroxyethyl acrylate unit;
"ACR" indicates hydrophilic group-containing acrylic polymer;
"SBR" indicates hydrophilic group-containing styrene-butadiene copolymer;
"CNT" indicates carbon nanotubes; and
"AcB" indicates acetylene black.

**[Table 1]**

| | | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|---|
| Olivine-type lithium phosphate compound | LFP | Volume-average particle diameter D50 (µm) | 1.0 | 1.0 | 2.1 | 0.8 | 1.0 | 1.0 | 1.0 | 3.1 | 0.4 | 1.0 | 2.1 |
| Water-soluble polymer | Average hydrodynamic radius (nm) | | 23 | 23 | 23 | 23 | 28 | 12 | 23 | 23 | 23 | 35 | 8 |
| | Acidic group-containing monomer unit AA (mass%) | | 5.5 | 5.5 | 5.5 | 5.5 | 20.0 | 5.0 | 5.5 | 5.5 | 5.5 | 10.0 | 5.0 |
| | Non-hydroxy group-containing (meth)acrylic acid ester monomer unit | Non-hydroxy group-containing (meth)acrylic acid alkyl ester monomer MA (mass%) | 5.0 | 5.0 | 5.0 | 5.0 | 5.0 | 12.0 | - | 5.0 | 5.0 | 2.0 | 10.0 |
| | | Monomer unit derived from monomer represented by formula (I) AA2ME (mass%) | 8.0 | 8.0 | 8.0 | 8.0 | 5.0 | 12.0 | 13.0 | 8.0 | 8.0 | 5.0 | 15.0 |
| | Hydroxy group-containing (meth)acrylic acid ester monomer unit β-HEA (mass%) | | 81.5 | 81.5 | 81.5 | 81.5 | 70.0 | 71.0 | 81.5 | 81.5 | 81.5 | 83.0 | 70.0 |
| | Weight-average molecular weight (-) | | 200000 | 200000 | 200000 | 200000 | 250000 | 120000 | 200000 | 200000 | 200000 | 350000 | 90000 |
| Ratio of water-soluble polymer average hydrodynamic radius r when D50 particle diameter of olivine-type lithium iron phosphate is 1 (-) | | | 0.023 | 0.023 | 0.011 | 0.029 | 0.028 | 0.012 | 0.023 | 0.007 | 0.058 | 0.035 | 0.004 |
| Particulate polymer | Volume-average particle diameter D50 (nm) | | 130 | 150 | 130 | 130 | 130 | 130 | 130 | 130 | 130 | 130 | 130 |
| | Type | | ACR | SBR | ACR | | | | | ACR | | | |
| Conductive material | Type | | CNT + AcB | | | | | | | CNT + AcB | | | |
| Evaluation | Close adherence of electrode mixed material layer | | A | A | A | B | A | B | A | C | D | C | D |
| | Output characteristics of secondary battery | | A | A | B | A | B | A | B | D | C | D | C |
| | Cycle characteristics of secondary battery | | A | A | A | A | A | B | B | C | D | C | D |

It can be seen from Table 1 that in Examples 1 to 7 in which the used slurry composition for a non-aqueous secondary battery electrode contained an olivine-type lithium phosphate compound having a volume-average particle diameter D50 of not less than 0.5 µm and not more than 3.0 µm and a water-soluble polymer having an average hydrodynamic radius of not less than 10 nm and not more than 30 nm, it was possible to form an electrode mixed material layer having high close adherence to a current collector and to produce a non-aqueous secondary battery having excellent output characteristics and cycle characteristics.

In contrast, it can be seen that in Comparative Examples 1 and 2 in which the volume-average particle diameter D50 of an olivine-type lithium phosphate compound was outside of the range set forth above and Comparative Examples 3 and 4 in which the average hydrodynamic radius of a water-soluble polymer was outside of the range set forth above, it was not possible to form an electrode mixed material layer having high close adherence to a current collector and it was not possible to produce a non-aqueous secondary battery having excellent output characteristics and cycle characteristics.

### INDUSTRIAL APPLICABILITY

According to the present disclosure, it is possible to provide a slurry composition for a non-aqueous secondary battery electrode that enables a balance of high levels of close adherence of an obtained electrode mixed material layer to a current collector and output characteristics and cycle characteristics of an obtained secondary battery.

Moreover, according to the present disclosure, it is possible to provide an electrode for a non-aqueous secondary battery that includes an electrode mixed material layer having excellent close adherence to a current collector and that can cause a secondary battery to display high output characteristics and cycle characteristics.

Furthermore, according to the present disclosure, it is possible to provide a non-aqueous secondary battery that includes this electrode for a non-aqueous secondary battery.

## Claims

1. A slurry composition for a non-aqueous secondary battery electrode comprising an olivine-type lithium phosphate compound and a water-soluble polymer, wherein
the olivine-type lithium phosphate compound has a volume-average particle diameter D50 of not less than 0.5 µm and not more than 3.0 µm, and
the water-soluble polymer has an average hydrodynamic radius of not less than 10 nm and not more than 30 nm.

2. The slurry composition for a non-aqueous secondary battery electrode according to claim 1, wherein the water-soluble polymer includes an acidic group-containing monomer unit in a proportion of not less than 3.0 mass% and not more than 40.0 mass%.

3. The slurry composition for a non-aqueous secondary battery electrode according to claim 1, wherein the water-soluble polymer includes, as a non-hydroxy group-containing (meth)acrylic acid ester monomer unit, either or both of a non-hydroxy group-containing (meth)acrylic acid alkyl ester monomer unit and a monomer unit derived from a monomer represented by formula (I), shown below: 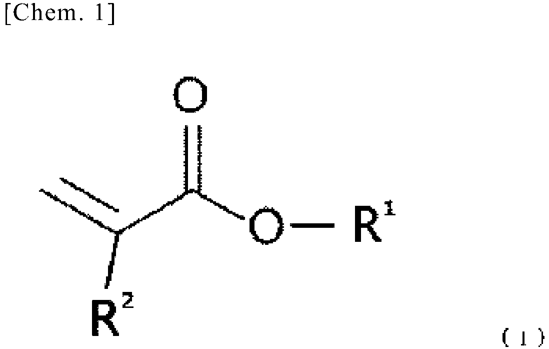 given that in formula (I), R¹ is a non-hydroxy group-containing organic group that includes at least one ether bond, and R² is a hydrogen atom or a methyl group.

4. The slurry composition for a non-aqueous secondary battery electrode according to claim 3, wherein the water-soluble polymer includes the non-hydroxy group-containing (meth)acrylic acid alkyl ester monomer unit in a proportion of not less than 2.0 mass% and not more than 15.0 mass% and includes the monomer unit derived from a monomer represented by formula (I) in a proportion of not less than 5.0 mass% and not more than 15.0 mass%.

5. The slurry composition for a non-aqueous secondary battery electrode according to claim 1, wherein a ratio of the volume-average particle diameter D50 of the olivine-type lithium phosphate compound and the average hydrodynamic radius r of the water-soluble polymer is within a range of D50:r = 1:0.005 to 1:0.050.

6. The slurry composition for a non-aqueous secondary battery electrode according to claim 1, further comprising a particulate polymer as a binder.

7. The slurry composition for a non-aqueous secondary battery electrode according to claim 1, further comprising either or both of one or more carbon nanotubes and a particulate conductive material as a conductive material.

8. An electrode for a non-aqueous secondary battery comprising an electrode mixed material layer formed using the slurry composition for a non-aqueous secondary battery electrode according to any one of claims 1 to 7.

9. A non-aqueous secondary battery comprising the electrode for a non-aqueous secondary battery according to claim 8.
